(19) Europäisches Patentamt
European Patent Office
Office européen des brevets

(11) EP 4 718 450 A1

(12) EUROPEAN PATENT APPLICATION
published in accordance with Art. 153(4) EPC

(43) Date of publication:
01.04.2026 Bulletin 2026/14

(21) Application number: 24853358.0

(22) Date of filing: 17.06.2024

(51) International Patent Classification (IPC):
G10L 21/02 (2013.01)          G10L 25/30 (2013.01)
G10L 21/0208 (2013.01)        G06N 3/0464 (2023.01)
G06N 3/084 (2023.01)

(52) Cooperative Patent Classification (CPC):
G10L 21/0208; G10L 21/02; G10L 21/0232;
G10L 21/0264; G10L 25/30

(86) International application number:
PCT/CN2024/099475

(87) International publication number:
WO 2025/035943 (20.02.2025 Gazette 2025/08)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 17.08.2023 CN 202311042065

(71) Applicant: Tencent Technology (Shenzhen)
Company Limited
Shenzhen, Guangdong 518057 (CN)

(72) Inventor: BAO, Feng
Shenzhen, Guangdong 518057 (CN)

(74) Representative: EP&C
P.O. Box 3241
2280 GE Rijswijk (NL)

(54) **SPEECH ENHANCEMENT MODEL TRAINING METHOD AND APPARATUS, DEVICE, MEDIUM AND PROGRAM PRODUCT**

(57) The present disclosure relates to the field of artificial intelligence, and in particular, to a method for training the speech enhancement model and apparatus, an electronic device, and a storage medium. The method includes: extracting a first audio feature of a to-be-enhanced speech signal through an input layer in each instance of iterative training of an initial version of the speech enhancement model; performing dimension-reduction on the first audio feature through a dimension-reduction layer, to obtain a dimensionality-reduced second audio feature; performing, through a mapping layer, feature mapping on the second audio feature by using a cyclic iteration manner, to obtain a third audio feature, a quantity of output channels of the mapping layer increasing progressively in a cyclic iteration process; and inputting the third audio feature to an output layer, to obtain vector of the estimated gain, and performing parameter adjustment on the initial version of the speech enhancement model with reference to ground-true gain. The present disclosure can ensure a processing effect of a trained model, and reduce operation complexity to improve an operation speed, thereby meeting a real-time operation requirement and enhancing a communication experience.

Obtain a set of training samples, wherein each training sample in the set of training samples comprises a first speech signal and a noisy speech signal, and the noisy speech signal is obtained by adding noise into the first speech signal — S31

Perform iterative training on an initial version of a speech enhancement model using the set of training samples to obtain a trained version of the speech enhancement model, where each iteration of the iterative training comprises S321 to S324 — S32

Input layer extracts a feature of the first speech signal of a training sample in the set of training samples and a feature of the noisy speech signal in the training sample and fuses the feature of the first speech signal and the feature of the noisy speech signal to obtain a first audio feature — S321

Dimension reduction layer compresses the first audio feature in a frequency-domain to obtain a second audio feature, wherein a dimension of the second audio feature in the frequency domain is less than the dimension of the first audio feature in the frequency domain — S322

Mapping layer converts the second audio feature into a third audio feature, where the mapping layer processes the second audio feature iteratively for a first quantity of cycles, and in every two adjacent cycles, a quantity of output channels used by the mapping layer in a precedent cycle is less than a quantity of output channels used by the mapping layer in a subsequent cycle — S323

Output layer converts the third audio feature into a vector of an estimated gain, where a parameter of the speech enhancement model is adjusted according to a difference between the estimated gain and a ground-truth gain — S324

FIG. 3

**Description**

The present disclosure claims priority to Chinese Patent Application No. 2023110420658, entitled "METHOD AND APPARATUS FOR TRAINING SPEECH ENHANCEMENT MODEL, DEVICE, MEDIUM, AND PROGRAM PRODUCT" filed with the China National Intellectual Property Administration on August 17, 2023.

FIELD OF THE TECHNOLOGY

The present disclosure relates to the field of artificial intelligence technologies, and in particular, to speech enhancement.

BACKGROUND OF THE DISCLOSURE

Speech enhancement models are widely applied to speech denoising scenarios with the rapid development of deep learning technology. The speech enhancement model may extract a valid signal may be extracted from an original speech signal for suppressing or reducing interferences due to a noise signal.
In the related art, the speech enhancement model usually comprises a plurality of layers of neural networks, such as a convolutional neural network (CNN), a long short-term memory (LSTM), and a gate recurrent unit (GRU). Hence, computation in the speech enhancement model is very complicated.
As a result, the speech enhancement model can hardly meet a requirement on real-time speech enhancement in real-time communication scenarios (such as an online conference, because a high delay are hazardous to communication experience.

SUMMARY

Embodiments of the present disclosure provide a method for training the speech enhancement model and apparatus, an electronic device, a storage medium, and a program product, to ensure a processing effect of a speech enhancement model and reduce operation complexity to improve an operation speed, thereby meeting a real-time operation requirement and enhancing a communication experience.
In an aspect, an embodiment of the present disclosure provides a method for training the speech enhancement model, including: obtaining a set of training samples, wherein each training sample in the set of training samples comprises a first speech signal and a noisy speech signal, and the noisy speech signal is obtained by adding noise into the first speech signal; and performing iterative training on an initial version of a speech enhancement model using the set of training samples to obtain a trained version of the speech enhancement model. The initial version of the speech enhancement model comprises an input layer, a dimension-reduction layer, a mapping layer, and an output layer. In each iteration of the iterative training: the input layer is configured for extracting a feature of the first speech signal of a training sample in the set of training samples, extract a feature of the noisy speech signal in the training sample, and fuse the feature of the first speech signal and the feature of the noisy speech signal to obtain a first audio feature; the dimension-reduction layer is configured for compressing the first audio feature in a frequency-domain to obtain a second audio feature, where a dimension of the second audio feature in the frequency domain is less than the dimension of the first audio feature in the frequency domain; the mapping layer is configured for converting the second audio feature into a third audio feature, where the mapping layer processes the second audio feature iteratively for a first quantity of cycles, and in every two adjacent cycles, a quantity of output channels used by the mapping layer in a precedent cycle is less than a quantity of output channels used by the mapping layer in a subsequent cycle; and the output layer is configured for converting the third audio feature into a vector of an estimated gain. Performing the iterative training on the initial version of the speech enhancement model comprises adjusting, in each iteration, a parameter of the speech enhancement model according to a difference between the estimated gain and a ground-truth gain.
In an aspect, an embodiment of the present disclosure provides a method for enhancing a speech signal, including: inputting a first speech signal into a speech enhancement model trained through the foregoing method to obtain a vector of the estimated gain; and removing noise from the first speech signal using the estimated gain to obtain an enhanced speech signal.
In an aspect, an embodiment of the present disclosure provides an apparatus for training a speech enhancement model, including: an obtaining unit, configured for obtaining a set of training samples, wherein each training sample in the set of training samples comprises a first speech signal and a noisy speech signal, and the noisy speech signal is obtained by adding noise into the first speech signal; and a training unit, configured for performing iterative training on an initial version of a speech enhancement model using the set of training samples to obtain a trained version of the speech enhancement model. The initial version of the speech enhancement model comprises an input layer, a dimension-reduction layer, a mapping layer, and an output layer. In each iteration of the iterative training: the input layer is configured for extracting a feature of the first speech signal of a training sample in the set of training samples, extract a feature of the noisy speech signal in the training sample, and fuse the feature of the first speech signal and the feature of the noisy speech signal to obtain a first audio feature; the dimension-reduction layer is configured for compressing the first audio feature in a frequency-domain to obtain a second audio feature, where a dimension of the second audio feature in the frequency domain is less than the dimension of the first audio feature in the frequency domain; the mapping layer is configured for converting the second audio feature into a third audio feature, where the mapping layer processes the second audio feature iteratively for a first quantity of cycles, and in every two adjacent cycles, a quantity of output channels used by the mapping layer in a precedent cycle is less than a quantity of output channels used by the mapping layer in a subsequent cycle; and the output layer is configured for converting the third audio feature into a vector of an estimated gain. The training unit is configured to adjusting, in each iteration, a parameter of the speech enhancement model according to a difference between the estimated gain and a ground-truth gain.

In an aspect, an embodiment of the present disclosure provides a speech enhancement apparatus, including: an inputting unit, configured for inputting a first speech signal into a speech enhancement model trained through the foregoing method for training the speech enhancement model to obtain a vector of the estimated gain; and an enhancing unit, configured for removing noise from the first speech signal using the estimated gain to obtain an enhanced speech signal.

In an aspect, an embodiment of the present disclosure further provides an electronic device, including a processor and a memory, the memory stores a computer program, and the computer program when executed by the processor causes the processor to perform the foregoing method for enhancing the speech signal or the foregoing method for training the speech enhancement model.

In an aspect, an embodiment of the present disclosure provides a computer-readable storage medium storing a computer program, where the computer program when executed on an electronic device causes the electronic device to perform the foregoing method for enhancing the speech signal or the foregoing method for training the speech enhancement model.

In an aspect, an embodiment of the present disclosure provides a computer program product including a computer program, where the computer program is stored in a computer-readable storage medium, and when a processor of an electronic device reads the computer program from the computer-readable storage medium, the computer program is executed by the processor to cause the electronic device to perform the foregoing method for enhancing the speech signal or the foregoing method for training the speech enhancement model.

The embodiments of the present disclosure at least have the following beneficial effects:

In the embodiments of the present disclosure, in each round of training the speech enhancement model, the first audio feature of each training sample is first extracted. Then, for reducing subsequent computation complexity, the dimension-reduction is performed on the first audio feature through the dimension-reduction layer to obtain the second audio feature with a reduced dimension. The second audio feature is input into the mapping layer for cyclic iterations, and quantities of output channels increase progressively throughout the iterations. In this way, a depth of feature mapping and a parameter amount can be increased without additional model structure to enhance a model training effect. Finally, the vector of the estimated gain is obtained based on the third audio feature output by the mapping layer. Therefore, in the embodiments of the present disclosure, dimension reduction is performed through the dimension-reduction layer, thereby greatly reducing the subsequent computation complexity. In addition, the cyclic iterations of the mapping layer enhances the model training effect, so that the trained speech enhancement model ensures a processing effect and has a reduced computation complexity, which improves a computation speed, meets a requirement on real-time computation, and improves a communication experience.

Other features and advantages of the present disclosure will be elaborated in subsequent specification and will be partially apparent from the specification or understood through the implementation of the present disclosure. The objectives and other advantages of the present disclosure can be achieved and obtained through the structures specifically pointed out in the specification, claims, and accompanying drawings.

BRIEF DESCRIPTION OF THE DRAWINGS

FIG. 1 is a schematic diagram of an application scenario of a method for enhancing a speech signal according to an embodiment of the present disclosure.

FIG. 2 is a schematic structural diagram of a speech enhancement model according to an embodiment of the present disclosure.

FIG. 3 is a flowchart of a method for training a speech enhancement model according to an embodiment of the present application.

FIG. 4 is a schematic structural diagram of an input layer of a speech enhancement model according to an embodiment of the present disclosure.

FIG. 5A is a schematic diagram of a quantity of output channels of a mapping layer of a speech enhancement model according to an embodiment of the present disclosure.

FIG. 5B is a schematic structural diagram of a mapping layer of a speech enhancement model according to an embodiment of the present disclosure.

FIG. 6 is a schematic structural diagram of an output layer of a speech enhancement model according to an embodiment of the present disclosure.

FIG. 7A is a schematic diagram of a process of training a speech enhancement model according to an embodiment of the present application.

FIG. 7B is a schematic diagram of a process of training a speech enhancement model according to another embodiment of the present application.

FIG. 8 is a flowchart of a method for enhancing a speech signal according to an embodiment of the present application.

FIG. 9 is a schematic logic diagram of a method for enhancing a speech signal according to an embodiment of the present disclosure.

FIG. 10 is a schematic diagram of an original speech signal and an enhanced speech signal according to an embodiment of the present disclosure.

FIG. 11 is a schematic structural diagram of an apparatus for training a speech enhancement model according to an embodiment of the present disclosure.

FIG. 12 is a schematic structural diagram of a speech enhancement apparatus according to an embodiment of the present disclosure.

FIG. 13 is a schematic structural diagram of hardware composition of an electronic device to which an embodiment of the present disclosure is applied.

FIG. 14 is a schematic structural diagram of hardware composition of another electronic device to which an embodiment of the present disclosure is applied.

DESCRIPTION OF EMBODIMENTS

To make the objectives, technical solutions, and advantages of the embodiments of the present disclosure clearer, the technical solutions of the present disclosure will be clearly and completely described below with reference to the accompanying drawings in the embodiments of the present disclosure. Apparently, the described embodiments are merely a part of embodiments in the technical solutions of the present disclosure rather than all of the embodiments. Based on the embodiments recorded in the document of the present disclosure, all other embodiments obtained by a person of ordinary skill in the art without making creative efforts shall fall within the protection scope of the technical solutions of the present disclosure.

The following describes some concepts in the embodiments of the present disclosure.

Speech enhancement refers to technology for extracting a useful speech signal from a noise background after a speech signal is interfered with or even overwhelmed by various noises, to suppress or reduce noise interference.

Convolutional neural network (CNN) refers a type of feedforward neural network including convolutional computation and having a deep structure. The CNN includes a convolutional layer, a pooling layer, and a fully connected layer. The convolutional layer is responsible for extracting a local feature of input data. The pooling layer is configured for greatly reducing a parameter magnitude (dimensionality reduction). The fully-connected layer is configured for outputting a desired result.

Attention mechanism derives from research on human vision. In cognitive science, due to a bottleneck in information processing, humans may selectively pay attention to a part of all information, and ignore other visible information. The mechanism is usually referred to as an attention mechanism. The attention mechanism may enable a neural network to have a capability of focusing on an input (or feature) subset of the neural network, and select a particular input. In a case of limited computing capability, the attention mechanism is a resource allocation solution that is a main means for resolving an information overload problem, to allocate a computing resource to a more important task.

Psychoacoustic scale is introduced as follows. A sensitivity of human ears to speech changes with a change in a frequency, and the sensitivity and the frequency are not simply in a linearly direct proportional relationship but are approximately in a logarithmic relationship. To better approximate a pickup feature of the human ears, nonlinear transformation is usually performed on a frequency of a speech to an psychoacoustic scale, to extract a speech feature. The psychoacoustic scale includes an equivalent rectangular bandwidth (ERB) scale, a Mel scale, a bark scale, or the like, which are all psychoacoustics measurement methods and are configured for describing nonlinear transformation of the human ears on frequency perception. The psychoacoustics is an interdisciplinary field that studies a relationship between an objective parameter (such as a frequency, an amplitude, and a phase) and a subjective feeling (such as loudness, tone, and timbre) of a sound.

The term "exemplary" used below means "used as an example, an embodiment, or illustration". Any embodiment described as being "exemplary" is not necessarily construed as being superior to or better than another embodiment.

The terms such as "first" and "second" herein are used only for the purpose of description and are not understood as indicating or implying the relative importance or implicitly specifying the quantity of the indicated technical features. Thus, features defined as "first" and "second" explicitly or implicitly include one or more of the features. In the description of the embodiments of the present disclosure, "plurality" means two or more, unless otherwise specified.

Artificial intelligence (AI) is a theory, method, technology, and application system that uses a digital computer or a machine controlled by the digital computer to simulate, extend, and expand human intelligence, perceive an environment, acquire knowledge, and use knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

AI is a comprehensive discipline and relates to a wide range of fields including both hardware-stage technologies and software-stage technologies. Basic AI technologies generally include technologies such as a sensor, a dedicated AI chip, cloud computing, distributed storage, a big data processing technology, an operating/interaction system, and electromechanical integration. AI software technologies mainly include several major directions such as a computer vision technology, a natural language processing technology, and machine learning/deep learning. With the development and progress of artificial intelligence, artificial intelligence is studied and applied to many fields, for example, common smart home, smart customer service, virtual assistance, smart speakers, intelligent sales and marketing, unmanned driving, automatic driving, robots, and intelligent medical treatment. It is believed that with the further development of future technologies, artificial intelligence will be applied to more fields and play an increasingly important role.

Machine learning (ML) is an interdisciplinary field that spans a plurality of disciplines such as probability theory, statistics, approximation theory, convex analysis, and algorithm complexity theory. ML specializes in studying how a computer simulates or implements a human learning behavior to obtain new knowledge or skills, and reorganizes an existing knowledge structure, so as to keep improving its performance.

Machine learning is the core of artificial intelligence, which is a basic solution for enabling a computer to be intelligent. Deep learning is the core of machine learning, which is a technology for implementing machine learning. Machine learning generally includes technologies such as deep learning, reinforcement learning, transfer learning, and inductive learning. The deep learning includes technologies such as a mobile visual neural network (Mobilenet), a convolutional neural network (CNN), a deep confidence network, a recursive neural network, an autoencoder, and a generative adversarial network.

In embodiments of the present disclosure including the embodiments of both the claims and the specification (hereinafter referred to as "all embodiments" or "all embodiments of the present disclosure"), an initial version of the speech enhancement model may be trained based on the deep learning technology in the machine learning, to obtain a trained version of the speech enhancement model, and then the speech enhancement model is employed to perform speech enhancement.

With the development and progress of artificial intelligence, artificial intelligence is studied and applied to many fields, for example, common smart home, smart customer service, virtual assistance, smart speakers, intelligent sales and marketing, unmanned driving, automatic driving, robots, and intelligent medical treatment. It is believed that with the further development of future technologies, artificial intelligence will be applied to more fields and play an increasingly important role.

The cloud technology is a hosting technology that unifies hardware, software, network, and other resources in a wide area network or a local area network to achieve computation, storage, processing, and sharing of data.

The cloud technology is a generic term of a network technology, an information technology, an integration technology, a management platform technology, and an application technology based on application of a cloud computing business model. The resources may form a resource pool and are used on demand, which is flexible and convenient. A cloud computing technology will become an important support. The background service of a technical network system requires a large number of computing and storage resources, for example, video websites, image websites, and more portal websites. With the rapid development and application of the Internet industry, each item may have its own recognition mark in the future, and the recognition marks need to be transmitted to a backend system for logical processing. Data of different levels is processed separately, and all kinds of industry data require a strong system support, which can be achieved only through the cloud computing. In the embodiments of the present disclosure, a speech enhancement model may be trained through cloud computing.

The following briefly introduces a design idea of the embodiments of the present disclosure.

In the related art, a speech enhancement model usually includes a plurality of layers of neural networks, such as a convolutional neural network (CNN), a long short-term memory (LSTM), and a gate recurrent unit (GRU). This causes the speech enhancement model to have high operation complexity. Therefore, in a real-time communication scenario (such as an online conference), it is difficult to meet a real-time operation requirement by using the speech enhancement model to perform speech enhancement. Consequently, a communication delay is caused, and a communication experience is affected.

In view of this, the embodiments of the present disclosure provide a method and an and apparatus for training the speech enhancement model, an electronic device, and a storage medium. When an initial version of the speech enhancement model is trained, to reduce computing complexity, a feature dimension is reduced by dimension-reduction, and through a mapping layer of the initial version of the speech enhancement model, feature mapping is performed on an input feature by using a cyclic iteration manner. Meanwhile, a quantity of output channels of the mapping layer progressively increases. In this way, a depth of feature mapping and a parameter amount can be increased without additional model structure, thereby ensuring a model training effect. Therefore, a speech enhancement model obtained by training in the embodiments of the present disclosure can ensure a processing effect and reduce operation complexity to improve an operation speed, thereby meeting a real-time operation requirement and enhancing a communication experience.

The following describes the preferred embodiments of the present disclosure with reference to the accompanying drawings of this specification. The preferred embodiments described herein are merely intended to describe and explain the present disclosure, but are not intended to limit the present disclosure. In addition, the embodiments of the present disclosure and features in the embodiments may be mutually combined without conflict.

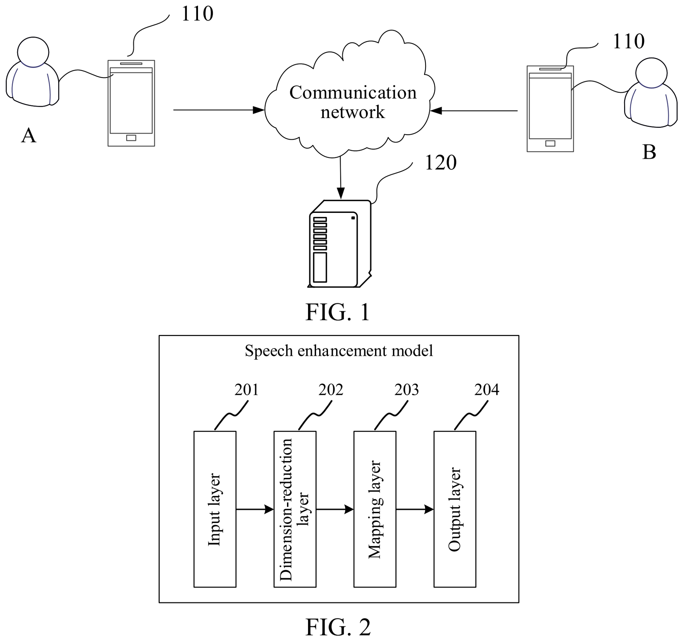

FIG. 1 is a schematic diagram of an application scenario according to an embodiment of the present disclosure. The diagram of the application scenario includes a terminal device 110 and a server 120.

In this embodiment of the present disclosure, the terminal device 110 includes, but is not limited to, a mobile phone, a tablet computer, a notebook computer, a desktop computer, a desktop computer, a smart speaker, a smart watch, an e-book reader, a smart speech interaction device, a smart home appliance, an in-vehicle terminal, or other devices. A client related to real-time communication may be installed on the terminal device. The client may be software (for example, conference software and social software), or may be a web page, a mini program, or the like. The server 120 may be a backend server corresponding to software, a web page, a mini program, or the like, or a server specially for speech enhancement. The present disclosure does not impose a specific limitation. The server 120 may be an independent physical server, or may be a server cluster or a distributed system formed by a plurality of physical servers, or may be a server that provides basic cloud computing services such as cloud services, cloud databases, cloud computing, cloud functions, cloud storage, network services, cloud communication, middleware services, domain name services, security services, content delivery networks (CDNs), big data, and artificial intelligence platforms.

In some implementations, the terminal device 110 and the server 120 may be directly or indirectly connected in a wired or wireless communication manner. The present disclosure does not impose a specific limitation.

tion.

Here, method for enhancing a speech signals or method for training the speech enhancement models in the embodiments of the present disclosure may be performed by an electronic device. The electronic device may be the terminal device 110 or the server 120. To be specific, the method for enhancing a speech signal may be performed by the terminal device 110 or the server 120, and the method for training the speech enhancement model may be performed by the terminal device 110 or the server 120, too.

In some embodiments, in a real-time communication scenario, an example in which the terminal device 120 performs both a method for enhancing a speech signal and a method for training the speech enhancement model is used for description.

The server 120 trains an initial version of the speech enhancement model by using the method for training the speech enhancement model in this embodiment of the present disclosure, to obtain a trained version of the speech enhancement model. In a process that a user A uses a terminal device 110 to perform real-time communication with a terminal device 110 of a user B, after the terminal device 110 of the user A transmits a speech signal of the user A to the terminal device 110 of the user B through the server 120. The terminal device 110 of the user B may process the received speech signal by using the method for enhancing a speech signal of this embodiment of the present disclosure and the trained version of the speech enhancement model, to obtain vector of the estimated gain, then perform speech enhancement on the speech signal based on the vector of the estimated gain, namely, denoise the speech signal to obtain an enhanced speech signal, and play the enhanced speech signal.

Here, FIG. 1 is merely an example for description. A quantity of terminal devices and a quantity of servers are not limited and are not specifically limited in this embodiment of the present disclosure.

A method for enhancing a speech signal and a method for training the speech enhancement model that are provided in exemplary implementations of the present disclosure will be described below with reference to the accompanying drawings in conjunction with the application scenario described above. The application scenario is merely shown for ease of understanding the spirit and principle of the present disclosure, and the implementations of the present disclosure are not limited in this aspect.

In this embodiment of the present disclosure, an initial version of the speech enhancement model is trained to obtain a trained version of the speech enhancement model. As shown in FIG. 2, the speech enhancement model includes an input layer 201, a dimension-reduction layer 202, a mapping layer 203, and an output layer 204. A training process of the speech enhancement model is described in the following embodiments.

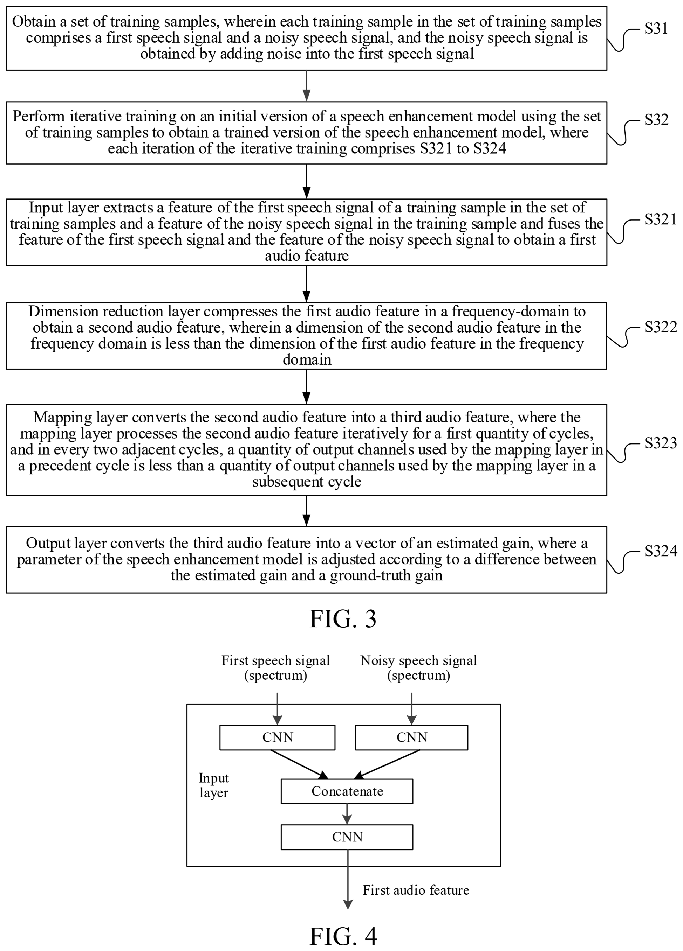

FIG. 3 shows a flowchart of a method for training a speech enhancement model according to an embodiment of the present application. An example in which a server performs the method is used. The method specifically includes the following operations S31 to S32:

S31: Obtain a set of training samples, wherein each training sample in the set of training samples comprises a first speech signal and a noisy speech signal.

In all embodiments, the first speech signal and the noisy speech signal of each training sample may be both spectral signals. In all embodiments, the first speech signal may be obtained by transforming an original first speech signal from a time domain into a frequency domain, and the noisy speech signal may be obtained by transforming an original noisy speech signal from the time domain into the frequency domain.

The first speech signal may be acquired on site. To improve model training quality, an acquisition environment needs to reduce occurrence of noise, such as background noise, as much as possible. The present disclosure does not limit that the first speech signal itself completely does not carry noise. For example, the first speech signal may carry some unavoidable noises.

The noisy speech signal is obtained by adding noise into the first speech signal. In all embodiments, the original noisy speech signal may be obtained by adding noise into the original first speech signal. The added noise may be a common noise in a real environment.

In all embodiments, the original first speech signal and the original noisy speech signal may be ultra-wide band speech signals (e.g., having a sampling rate of 32000 Hz and a bandwidth of 16000 Hz). They may alternatively be ordinary wide band speech signals, which is not limited herein.

Specifically, the original first speech signal may be transformed from a time domain into a frequency domain by using discrete Fourier transform. The discrete Fourier transform includes fast Fourier transform (FFT), or the like. For example, FFT is performed on the original first speech signal to obtain feature values of a plurality of frequency points (or frequency bins). Each feature value includes a real part and an imaginary part of an amplitude. The real parts represent an amplitude of the speech signal, and the imaginary parts indicate how a phase of the speech signal changes with a frequency.

In addition, each training sample further includes a ground-true gain. The ground-true gain may be calculated using the first speech signal and the noisy speech signal in the training sample. In all embodiments, the ground-true gain may be obtained by dividing an energy spectrum of the first speech signal by a sum of an energy spectrum of the first speech signal and an energy spectrum of the noisy speech signal. Hence, the ground-true gain may be a vector that can accurately identify the noise in the noisy speech signal.

S32: Perform iterative training on an initial version of a speech enhancement model using the set of training samples to obtain a trained version of the speech enhancement model. Each iteration of the iterative training comprises the following operations S321 to S324.

S321: The input layer extracts a feature of the first speech signal of a training sample in the set of training samples, extracts a feature of the noisy speech signal in the training sample, and fuses the feature of the first speech signal and the feature of the noisy speech signal to obtain a first audio feature.

In all embodiments, the input layer of the speech enhancement model may use a neural network, for example, a convolutional neural network. The feature extraction is respectively performed on the first speech signal and the noisy speech signal through the convolutional neural network, and then the fusion is performed to obtain the first audio feature. As an example, it is assumed that each of the first speech signal and the noisy speech signal comprises the feature values of 513 frequency points. After the feature extraction and the fusion are performed through the input layer, a feature dimension of the obtained first audio feature may be 513.

The first speech signal and the noisy speech signal for obtaining the first audio feature may be called a "speech signal pair". Assuming speech signal pair 1 includes first speech signal 1 and noisy speech signal 1, noisy speech signal 1 is obtained by adding noise to first speech signal 1.

In an embodiment, as shown in FIG. 4, the input layer includes two convolutional neural networks that are parallel with each other and a third convolutional neural network connected to these two convolutional neural networks. The first speech signal and the noisy speech signal are inputted into the two parallel convolutional neural networks, respectively. Output features of the two parallel convolutional neural networks are concatenated and then input to the third convolutional neural network, and thus the two output features are integrated to obtain the first audio feature.

S322: The dimension-reduction layer compresses the first audio feature in a frequency-domain to obtain a second audio feature, where a dimension of the second audio feature in the frequency domain is less than the dimension of the first audio feature in the frequency domain.

The dimension-reduction layer may divide the frequency points of the first audio feature into frequency bands of a preset quantity. For example, the dimension-reduction layer may include at least one band-pass filter. The frequency points of the first audio feature may be divided into the frequency bands through conversion between a linear frequency scale and a psychoacoustic scale, so as to obtain the second audio feature comprising respective feature values for the frequency bands. It is assumed that the first audio feature includes 513 dimensions, namely, feature values of 513 frequency points. The second audio feature is obtained by dividing 513 frequency points into the frequency bands of the preset quantity, and the second audio feature may be formed by the respective feature values for the frequency bands. The feature value for each frequency band may comprise an amplitude. In all embodiments, the preset quantity may be less than 513, for example, may be 128 (i.e., a dimension of the second audio feature is 128). Thereby, a dimension of the first audio feature is reduced through the dimension-reduction layer to obtain the second audio feature with the reduced dimension.

In all embodiments, operation S32 may include the following operations A1 to A2:

A1: Transform the first audio feature from a linear frequency scale into a psychoacoustic scale to obtain a transformed first audio feature, and divide, using the psychoacoustic scale, the transformed first audio feature into audio sub-features of a preset quantity.

The psychoacoustic scale may be an ERB scale, a Mel scale, or a Bark scale. In the transformation, a lowest frequency point and a highest frequency point in the linear frequency scale (e.g., the hz scale) of the first audio feature may be transformed into the psychoacoustic scale through a nonlinear equation. As an example, the psychoacoustic scale is the ERB scale, and the lowest frequency point and the highest frequency point in the hz scale are transformed using the following equation (1) to calculate a lowest ERB scale and a highest ERB scale.

$$\begin{cases} ERB = A \log_{10}(1 + hz\,(0.00437)) \\ A = \dfrac{1000 \log_e(10)}{24.7 \times 4.37} \end{cases} \tag{1}$$

When the preset quantity is equal to M. In this case, a range from the lowest psychoacoustic scale to the highest psychoacoustic scale is uniformly divided into M parts to obtain M scale segments, and the M audio sub-features are parts of the transformed first audio feature in the M scale segments, respectively. For example, if the lowest ERB scale is 0, and the highest ERB scale is 40, an ERB range from 0 to 40 is divided into M scale segments with equal lengths.

A2: Transform the audio sub-features from the psychoacoustic scale into the linear frequency scale to obtain transformed audio sub-features, respectively, where each transformed audio sub-feature occupies a respective frequency band in the linear frequency scale, and filter each of the transformed audio sub-features through a respective band-pass filter to obtain a respective element of the second audio feature, where each element of the second audio feature represents a feature value of a part of the first audio feature in the respective frequency band.

Here the scale segment of each audio sub-feature is inversely transformed from the psychoacoustic scale into the linear frequency scale. The inverse transformation is an inverse process of the foregoing transformation in operation A1. The ERB scale is further taken as an example. The inverse transformation follows an inverse equation of the equation (1), from ESB to hz. Each scale segment is inversely transformed into a respective frequency band in the linear frequency scale. Hence, the obtained second audio feature comprises the feature values of the frequency bands of the preset quantity. The second audio feature is in a form of a feature vector.

In this embodiment of the present disclosure, the first audio feature is transformed from the frequency domain into the psychoacoustic scale, so that the frequency points of the first audio feature can be divided into the frequency band of the preset quantity according to the psychoacoustic scale to obtain the second audio feature. Thereby, a dimension in the frequency dimension is reduced. Computation complexity can be reduced and a computation speed can be improved in subsequent operations.

S323: The mapping layer converts the second audio feature into a third audio feature, where the mapping layer processes the second audio feature iteratively for a first quantity of cycles, and in every two adjacent cycles, a quantity of output channels used by the mapping layer in a precedent cycle is less than a quantity of output channels used by the mapping layer in a subsequent cycle.

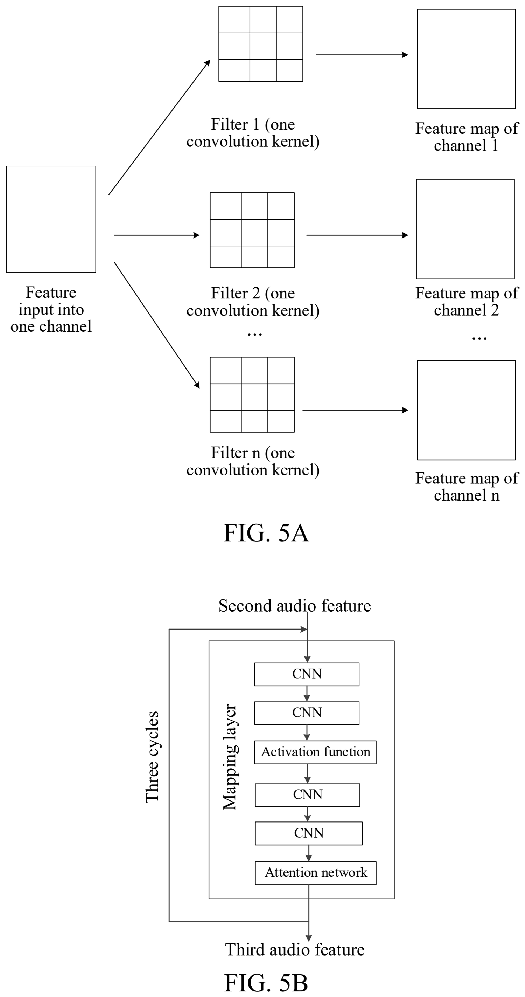

The first quantity may be set on requirement. For example, the first quantity may be set to 3. This is not limited herein. In each iteration cycle, the quantity of output channels used by the mapping layer may be set on requirement. This may be specifically implemented by configuring a network structure of the mapping layer. For example, the mapping layer includes a convolutional neural network, and the quantity of output channels of the mapping layer depends on a quantity of filters in a convolutional layer. The filter may be considered as a set of convolution kernels. That is, each filter may include one or more convolution kernels and thus can output a feature map, and a quantity of feature maps is equal to the quantity of output channels. For example, as shown in FIG. 5A, there is only one input channel, the input feature is convolved by n filters separately (each filter comprising one convolution kernel), and each filter outputs a feature map of a respective output channel, thereby obtaining feature maps of n channels. In this case, the quantity of output channels is equal to n. Throughout the multiple iteration cycles, the quantity of the utilized filters may increase progressively iteration-by-iteration, so that the quantity of output channels increases iteration-by-iteration.

In all embodiments, the quantity of output channels of the mapping layer may increase exponentially as the sequential number of th iteration increases. For example, there are three iterations, and the quantities of output channels are 32, 64, and 128 in sequence. This is not limited herein.

Herein the cyclic iteration is performed on the second audio feature through the mapping layer, and the quantity of output channels progressively increases, so that a depth of feature mapping and a parameter amount can be increased without additional model structure.

Characteristics of the training sample signal can be learned more effectively, which ensures a processing effect of a trained model.

In some embodiments, the mapping layer may include at least one convolutional neural network and an attention network. Operation S33 may include the following operations B1 to B2.

The following operation B1 is performed iteratively until the quantity of iterations reaches the first quantity:

B1: Perform convolution on the second audio feature sequentially through the at least one convolutional neural network to obtain an intermediate convolutional feature, and process the intermediate convolutional feature through the attention network to obtain a new feature serving as an update of the second audio feature.

A quantity of layers of convolutional neural networks of the mapping layer may be set on requirement. The mapping layer may further include an activation function, for example, a PReLU function, a ReLU function, a tanh function, or a sigmoid function. The activation function may be located among the convolutional neural networks or may be located between the at least one convolutional neural network and the attention network. After the second audio feature is inputted and passes through the at least one convolutional neural network in sequence, convolutional features of multiple channels may be obtained (i.e., the intermediate convolutional feature is obtained). Then, different weights are assigned to the convolutional features of the different channels according to the attention network (hence, more attention is accurately paid to information that is more important), and thereby the convolutional features are fused according to the weights to obtain the update of the second audio feature).

B2: The new feature in a last cycle of the iterative cycles serves as the third audio feature.

In all embodiments, as shown in FIG. 5B, the mapping layer may comprise two convolutional neural networks that are connected to each other, an activation function, a third convolutional neural network, and an attention network. If the first quantity is equal to three, the second audio feature is inputted into and passes through the two convolutional neural networks, the activation function, the third convolutional neural network, and the attention network in sequence, and an output the attention network is inputted into and passes the foregoing networks in sequence again. The rest cycles can be deduced by analogy. The third audio feature is output after the three cycles are completed. The third audio feature may be in the form of a feature vector. The third audio feature also comprises feature values for the frequency bands of the preset quantity.

Here the mapping layer first convolves the input second audio feature and then controls iteration of the convolutional features through the attention network, so that more attention can be paid to important information in the convolutional features, thereby improving processing performance and processing efficiency of the speech enhancement model.

S324: The output layer converts the third audio feature into a vector of an estimated gain. A parameter of the speech enhancement model is adjusted according to a difference between the estimated gain and a ground-truth gain.

The output layer may include a neural network, and the neural network may be a convolutional neural network or the like. The third audio feature outputted by the mapping layer is inputted into the convolutional neural network to obtain the vector of the estimated gain. In all embodiments, the vector of the estimated gain may be formed by respective estimated gain values for the frequency bands of the preset quantity. Thus, a dimension of the vector of the estimated gain is identical to the dimension of the second audio feature (vector) outputted by the dimension-reduction layer. Their dimensions may be equal to 128. Before the difference between the estimated gain and the ground-true gain is determined, the vector of the estimated gain may be decompressed in the frequency domain, that is, the dimension of the vector of the estimated gain may be increased, such that the dimension of the vector of the estimated gain is equal to the dimension (e.g. 513) of the noisy speech signal. The decompression may be an inverse process of compression in operation S32. After the depression, a difference between the decompressed vector (i.e., the vector with increased dimension) of the estimated gain and a vector of the ground-true gain is calculated, and the parameter of the speech enhancement model is adjusted according to the difference.

The estimated gain is configured for reflecting noise, which is recognized by the current version of the speech enhancement mode on a basis of the first speech signal and the noisy speech signal, in the noisy speech signal. The ground-true gain represents the actual noise that is added to the first speech signal (i.e., that is in the noisy speech signal). Hence, the difference between the two reflects a recognition error of the current version of the speech enhancement model accurately, and thus guide the adjustment of a model parameter.

In al embodiments, operation S324 may include the following operations C1 to C2.

C1: Decompress the vector of the estimated gain in the frequency domain to obtain a decompressed vector of the estimated gain, where the decompressed vector comprises estimated gain values for all frequency points of the noisy speech signal, and the gained value for each frequency band serves as the gain values for all frequency points in said frequency band.

The decompression in the frequency domain may be an inverse process of the compression in the frequency domain as described in operation S322. In all embodiments, the decompression may be as follows. The frequency bands of the preset quantity are respectively transformed from the linear frequency scale into the psychoacoustic scale to obtain their respective scale segments in the psychoacoustic scale, and these scale segments of the preset quantity range are combined to form an integral range in the psychoacoustic scale. Then, the integral range is transformed into the linear frequency scale. Accordingly, the estimated gain values of all frequency points are obtained.

C2: Adjust the parameter of the speech enhancement model according to the difference between the decompressed vector of the estimated gain and a vector of the ground-truth gain.

In all embodiments, the difference between the vector of the estimated gain and the vector of the ground-true gain may be a loss calculated through a loss function. For example, the loss function may be a mean-square error (MSE) loss function. The loss is backpropagated. In other words, respective gradients of parameters of the network layers in the speech enhancement model are calculated through the backpropagation passing through the model, and then the parameters of the network layers of the current version of the speech enhancement model are updated through gradient descent. For example, the parameters of the network layers in the speech enhancement model may include a convolution kernel parameter (such as a weight), a bias parameter, and the like, and may further include an activation function parameter or the like.

The gain (the estimated gain and the ground-true gain) are expressed in the frequency domain (e.g., by the gain values of the frequency bands of the preset quantity). The decompressed vector of the estimated gain may be obtained through above decompression processing, and the difference in the frequency domain between the decompressed vector of the estimated gain and vector of the ground-true gain are determined. Since the frequency domain is more suitable for expressing speech signals, the difference in the frequency domain between the two gains is identified more intuitively and accurately, which helps the speech enhancement model learn how to recognize noise quickly. Thereby, quality of training the model is improved.

In the embodiments of the present disclosure, dimension reduction is performed through the dimension-reduction layer in each round of training of the speech enhancement model, thereby greatly reducing subsequent operation complexity. In addition, due to the cyclic iteration of the mapping layer, a depth of feature mapping and a parameter amount can be increased without additional model structure, so that a model training effect is enhanced, and the trained version of the speech enhancement model ensures a processing effect and reduces the operation complexity to improve an operation speed, thereby meeting a real-time operation requirement and enhancing a communication experience.

In all embodiments, the output layer in S324 may comprise an intermediate convolutional network and an output convolutional network, and operation S324 includes the following operations D1-D2.

D1: The intermediate convolutional network converts the third audio feature into an intermediate audio feature, where the intermediate convolutional network processes the third audio feature iteratively for a second quantity of cycles to obtain the intermediate audio feature, and a quantity of output channels used by the intermediate convolutional network is identity among the cycles.

The intermediate convolutional network may include at least one convolutional neural network. A quantity of the convolutional neural network(s) may be set on requirement, and the second quantity may be set on requirement. For example, the intermediate convolutional network includes two convolutional neural networks, and the second quantity is equal to two. This is not limited herein

The quantity of output channels used by the intermediate convolutional network may be set on requirement. For example, the quantity of output channels used by the intermediate convolutional network may be equal to the quantity of output channels used by the mapping layer in the last cycle of the conversion from the second audio feature to the third audio feature. For example, the quantity of the output layer used by the mapping layer is equal to 128. This is not limited herein.

D2: The output convolutional network converts the intermediate audio feature into the estimated gain, where the output convolutional network processes the intermediate audio feature iteratively for a third quantity of cycles to obtain the vector of the estimated gain, and in every two adjacent cycles, a quantity of output channels used by the output convolutional network in a precedent cycle is greater than a quantity of output channels used by the output convolutional network in a subsequent cycle.

The output convolutional network may include at least one convolutional neural network. A quantity of the convolutional neural network(s) may be set on requirement, and the third quantity may be set on requirement. For example, the output convolutional network includes three convolutional neural networks, and the third quantity is three. This is not limited herein.

The quantity of output channels used by the output convolutional network in its cycles may be set on requirement. For example, the quantity of output channels decreases exponentially cycle-by-cycle (or called iteration-by-iteration). It is assumed that there are three cycles of iteration in the conversion of the mapping layer, and the quantities of output channels used by the mapping layer are 32, 64, and 128, respectively. In such case, there are also three cycles performed by the output convolutional network, and the quantities of output channels used by the output convolutional network are 128, 64, and 32, respectively. This is not limited herein.

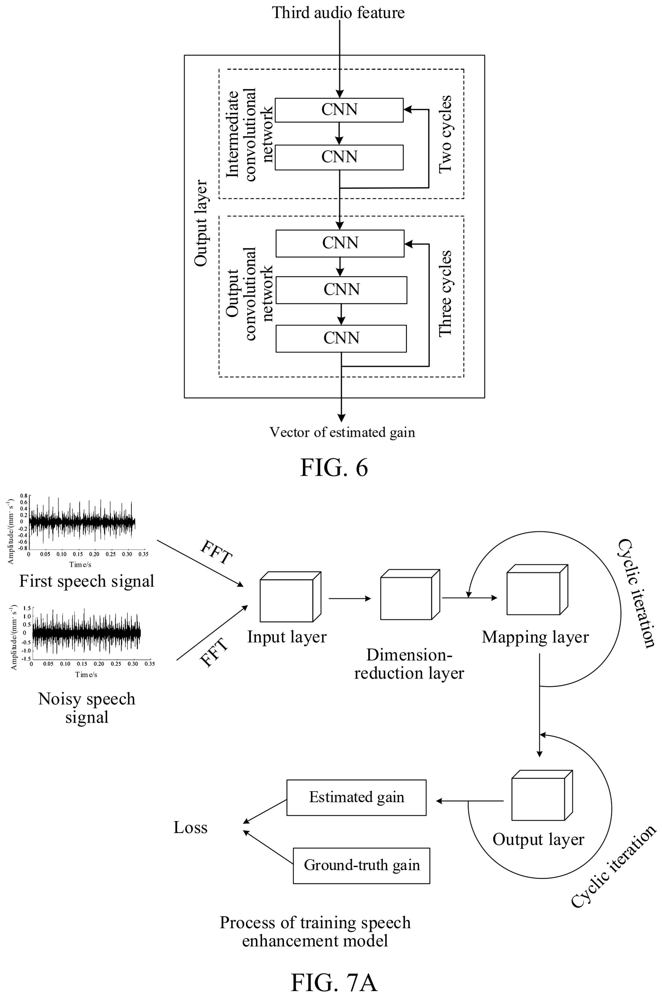

In all embodiments, as shown in FIG. 6, the intermediate convolutional network in the output layer may comprise two convolutional neural networks that are connected, and the output convolutional network may comprise three convolutional neural networks that are connected in sequence. It is assumed that the quantity of cycles of iterations performed by the intermediate convolutional network is two and the quantity of cycles of iterations performed by the output convolutional network is three. The third audio feature outputted by the mapping layer is inputted into the two convolutional neural networks of the intermediate convolutional network in sequence, and two cycles of iteration are performed for outputting the intermediate audio feature. Then, the intermediate audio feature is inputted into the three convolutional neural networks of the output convolutional network in sequence, and three cycles of iteration are performed for outputting the vector of the estimated gain.

Hence, the cyclic iterations and convolutions are performed on the output of the mapping layer through the intermediate convolutional network, which further enhances a feature extraction effect. Then, the cyclic iterations and convolutions are performed on the output of the intermediate convolutional network through the output convolutional network, and the quantity of output channels are increasing iteration-by-iteration, such that the vector of the estimated gain is generated.

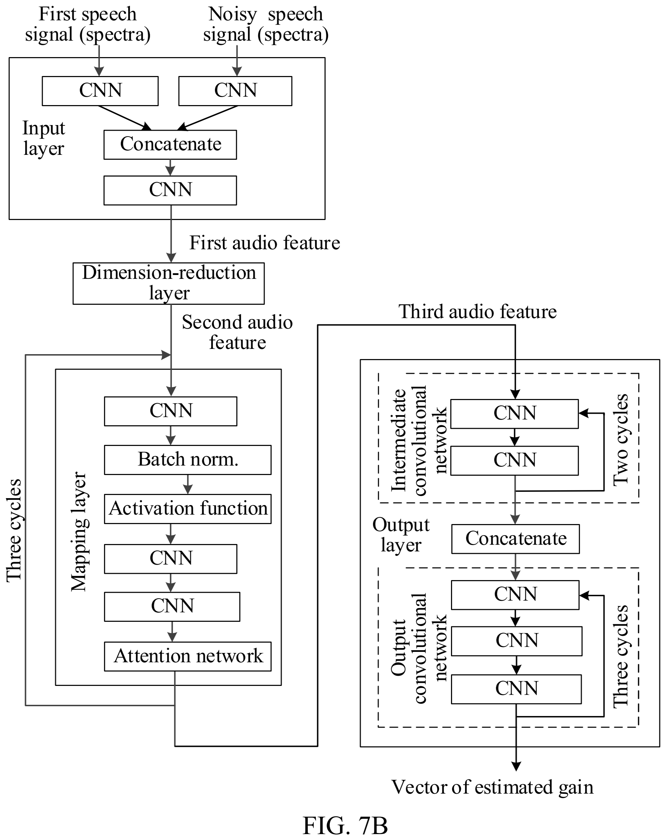

A process of training the speech enhancement model will be exemplarily described below with reference to FIG. 7A and FIG. 7B according to an embodiment of the present disclosure.

In this embodiment, a training sample input into the current version of the speech enhancement model comprises a pair of the first speech signal and the noisy speech signal. As shown in FIG. 7A, before the training sample is inputted into the speech enhancement model, FFT is first performed on the first speech signal and the noisy speech signal, respectively. For example, the first speech signal and the noisy speech signal are respectively transformed by using an FFT operation with 1024 sampling points to obtain spectral signals of the two signals. Each spectral signal includes amplitudes at frequency points. Each amplitude includes a real part and an imaginary part. The real parts include 513 values, and the imaginary parts also include 513 values. Therefore, there are 513*4 values in total.

Then, the spectral signals of the first speech signal and the noisy speech signal are inputted into an input layer and a dimension-reduction layer of the speech enhancement model in sequence. An output of the dimension-reduction layer is inputted into a mapping layer for cyclic iteration. Furthermore, a quantity of output channels used by the mapping layer increases progressively iteration-by-iteration, and a quantity of iterations is set on requirement. An output of the mapping layer is inputted into an output layer for cyclic iteration. The output layer includes an intermediate convolutional network and an output convolutional network. Cyclic iteration is performed in these two convolutional networks, and quantities of the cycles of iteration in these two convolutional networks are on requirement. In addition, a quantity of output channels used by the intermediate convolutional network remains unchanged among its cycles, and a quantity of output channels used by the output convolutional network increases progressively iteration-by-iteration. Finally, the output layer outputs a vector of the estimated gain, calculates a loss between the (decompressed) vector of the estimated gain and the vector of the ground-true gain (which is calculated from the first speech signal and the noisy speech signal), and adjust the parameter of the speech enhancement model according to the loss.

As an example, as shown in FIG. 7B, each operation of training the speech enhancement model is as follows.

1. Obtain a training sample which includes a spectral signal of the first speech signal and a spectral signal of the noisy speech signal. For example, the spectral signals include 513*2 feature values in total.

2. Input the spectral signals of both the first speech signal and the noisy speech signal of the training sample to two parallel convolutional neural networks, respectively, of the input layer, fuse and splice outputs of the two convolutional neural networks, and then integrate the features through one convolutional neural network to obtain a first audio feature.

3. Input the first audio feature into the dimension-reduction layer, for example, an ERB module. The dimension-reduction layer is configured to perform dimension-reduction on the first audio feature to further reduce the computation complexity.

For example, a dimension of the first audio feature is reduced from 513 to 128 (it is assumed that the dimension-reduction layer outputs gains for 128 frequency bands), to obtain a second audio feature, thereby reducing the quantity of feature dimensions.

4. Input the output of the dimension-reduction layer to the mapping layer, and perform three cycles of iterations through a series of sub-networks: a convolutional neural network, batch normalization, an activation function, two convolutional neural networks, and one attention network. Quantities of output channels used in the three cycles of iterations increase progressively cycle-to-cycle.

A function of the batch normalization is to normalize an output of a first convolutional neural network, so as to solve a problem that a value in a deep neural network is unstable, so that training samples in the same batch have similar feature distributions and are trained more easily. The activation function may be a PReLU function, an ReLU function, a tanh function, a sigmoid function, or the like.

For example, the quantities of output channels used by the mapping layer in the three cycles are 32, 64, and 128, respectively, so that a network depth and a parameter amount are increased, and features in the signals can be learned more effectively.

5. Input a third audio feature, which is outputted by the mapping layer through the above three cycles of iterations, into the intermediate convolutional network of the output layer. The intermediate convolutional network includes two convolutional neural networks. There are two cycles of iteration, and quantities of output channels in the two cycles remain unchanged. For example, the quantities are 128 and 128.

6. Input the result, which is outputted by the intermediate convolutional network through the above two cyclic iterations, into the output convolutional network of the output layer. The output convolutional network may include three convolutional neural networks. There are three cycles of iterations, and quantities of output channels in the three cycles decrease progressively cycle-by-cycle.

For example, the quantities of output channels in the three cycles are 128, 64, and 32, respectively, such that the quantity of output channels is decreased. The dimension of the output is consistent with the dimension of the input feature of the mapping layer.

7. The output layer estimates the vector of the estimated gain, then calculates the loss between the estimated gain and the ground-true gain (which is calculated based on the first speech signal and the noisy speech signal), and adjusts the parameter of the speech enhancement model according to the loss.

Specifically, the frequency band decompression may be performed on the vector of the estimated gain, which is the inverse process of the frequency-domain compress performed by the dimension-reduction layer in operation 3, such that a vector with increased dimension is obtained as the estimated gain. For example, the quantity of dimensions increases from 128 to 513. The ground-true gain is calculated according to the first speech signal and the noisy speech signal, e.g., an energy spectrum (represented by the spectral signal) of the first speech signal may be divided by a sum of the energy spectrum of the first speech signal and an energy spectrum of the noisy speech signal to calculate the ground-true gain. Finally, the loss between the depressed vector of the estimated gain and the vector of the ground-true gain may be calculated through the MSE loss function.

After the training on the initial version of the speech enhancement model is completed, a trained version of the speech enhancement model is obtained. The speech enhancement model may be used for online enhancement. Only discrete Fourier transform (e.g. FFT) needs to be performed on the noisy speech signal to obtain a spectral feature, which comprises 513*2 feature values, e.g., real parts and imaginary parts (which are consistent with the input features in the above training process). Then, the spectral feature is input into the trained version of the speech enhancement model, and the model assign parameters adaptively to obtaining an optimal vector of the estimated gain. Finally, after the vector of the estimated gain is decompressed in the frequency domain, the depressed vector of the estimated gain and a spectrum of the noisy speech signal are multiplied, and the result of multiplication is subject to inverse FFT to obtain a final enhanced speech signal.

An embodiment of the present disclosure further provides a method for enhancing a speech signal. This method is implemented by using the trained version of the speech enhancement model in the above embodiment. The method for enhancing a speech signal will be described below.

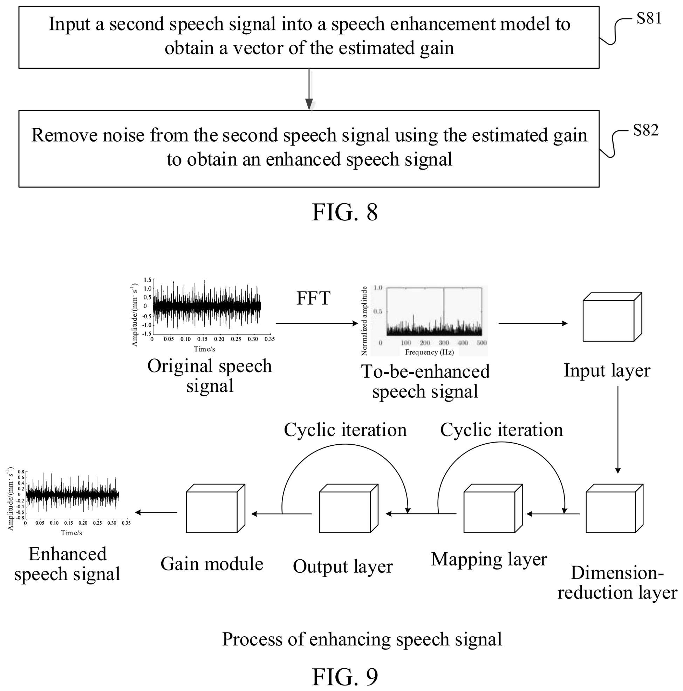

FIG. 8 is a flowchart of a method for enhancing a speech signal according to an embodiment of the present disclosure. An example in which a terminal device is an execution entity is used. A specific implementation flow of the method includes S81 to S82 below:

S81: Input a second speech signal into a speech enhancement model to obtain a vector of the estimated gain.

In real-time communication an original speech signal received by the terminal device is a time-domain signal, e.g., a horizontal axis of the signal represents time and a vertical axis of represents an amplitude. To facilitate feature analysis on the original speech signal, the original speech signal is transformed from the time domain into the frequency domain to obtain the first speech signal. For example, a horizontal axis of the second speech signal (hereinafter also called to-be-enhanced speech signal) represents frequency and a vertical axis represents an amplitude. In all embodiments, the original speech signal may be an ultra-wide band speech signal or may be an ordinary wide band speech signal. This is not limited herein.

The original speech signal may be transformed from the time domain into the frequency domain by using discrete Fourier transform. For example, the FFT is performed on the original speech signal to obtain feature values for multiple frequency points. Each feature value includes a real part and an imaginary part. The real parts represent amplitude of the signal, and the imaginary parts represent a phase of the signal with frequency.

As illustrated in the above embodiments, the speech enhancement model includes an input layer, a dimension-reduction layer, a mapping layer, and an output layer. The to-be-enhanced speech signal is inputted to the above network layers in sequence to obtain the vector of the estimated gain.

The specific implementation flow of S81 will be described below.

In all embodiments, step S81 may include the following operations E1 to E4:

E1: Extract a first audio feature of the to-be-enhanced speech signal through the input layer of the speech enhancement model.

The feature extraction is performed on the to-be-enhanced speech signal through the input layer of the speech enhancement model, and a dimension of the obtained first audio feature may be 513. To be specific, a quantity of feature dimensions of the first audio feature may be consistent with a quantity of feature dimensions of the to-be-enhanced speech signal.

E2: Compress the first audio feature in the frequency domain through the dimension-reduction layer of the speech enhancement model to obtain a second audio feature. A quantity of feature dimensions of the second audio feature is less than the quantity of feature dimensions of the first audio feature.

A specific implementation process of this operation is similar to the specific implementation process of S322 in the above embodiment of the present disclosure, and details thereof will not be elaborated herein again.

E3: Convert the second audio feature into a third audio feature through the mapping layer, where the mapping layer processes the second audio feature iteratively for a first quantity of cycles, and in every two adjacent cycles, a quantity of output channels used by the mapping layer in a precedent cycle is less than a quantity of output channels used by the mapping layer in a subsequent cycle.

A specific implementation process of this operation is similar to the specific implementation process of S323 in the above embodiment of the present disclosure, and details thereof will not be elaborated herein again.

E4: Convert the third audio feature into the vector of the estimated gain through the output layer of the speech enhancement mode, the vector of the estimated gain being configured for performing speech enhancement on the to-be-enhanced speech signal.

A specific implementation process of this operation is similar to the specific implementation process of S324 in the above embodiment of the present disclosure, and details thereof will not be elaborated herein again.

In this embodiment of the present disclosure, when the speech enhancement model is used for speech enhancement, the first audio feature of the to-be-enhanced speech signal is first extracted. Then, to reduce subsequent operation complexity, the dimension-reduction is performed on the first audio feature, to obtain the dimensionality-reduced second audio feature. Further, through the mapping layer of the speech enhancement model, the feature mapping is performed on the second audio feature by using the cyclic iteration manner. Meanwhile, the quantity of output channels of the mapping layer progressively increases. In this way, a depth of feature mapping can be increased without additional model structure, thereby ensuring a model processing effect. Finally, the vector of the estimated gain is obtained based on the third audio feature outputted by the mapping layer, so as to perform speech enhancement on the to-be-enhanced speech signal. Therefore, this embodiment of the present disclosure can ensure a processing effect and reduce operation complexity to improve an operation speed, thereby meeting a real-time operation requirement and enhancing a communication experience.

S82: Remove noise from the second speech signal using the estimated gain to obtain an enhanced speech signal.

The vector of the estimated gain includes estimated gains values of frequency bands of a preset quantity. Before the to-be-enhanced speech signal is enhanced using the vector of the estimated gain, the vector of the estimated gain may be decompressed in the frequency domain to obtain the estimated gain values of the frequency points of the to-be-enhanced speech signal. The decompression may be understood as an inverse process of the compression in operation E2.

In this embodiment of the present disclosure, when the speech enhancement model is used for speech enhancement, the first audio feature of the to-be-enhanced speech signal is first extracted. Then, to reduce subsequent operation complexity, the dimension-reduction is performed on the first audio feature, to obtain the dimensionality-reduced second audio feature. Further, through the mapping layer of the speech enhancement model, the feature mapping is performed on the second audio feature by using the cyclic iteration manner. Meanwhile, the quantity of output channels of the mapping layer progressively increases. In this way, a depth of feature mapping can be increased without additional model structure, thereby ensuring a model processing effect. Finally, the vector of the estimated gain is obtained based on the third audio feature outputted by the mapping layer, so as to perform speech enhancement on the to-be-enhanced speech signal. Therefore, this embodiment of the present disclosure can ensure a processing effect and reduce operation complexity to improve an operation speed, thereby meeting a real-time operation requirement and enhancing a communication experience.

In all embodiments, the operation S82 may comprise the following operations F1 to F3.

F1: Decompress the vector of the estimated gain in the frequency domain to obtain a decompressed vector of the estimated gain, where the decompressed vector comprises estimated gain values for all frequency points of the second speech signal, and the gained value for each frequency band serves as the gain values for all frequency points in said frequency band.

In all embodiments, the decompression may be as follows. The frequency bands of the preset quantity are respectively transformed from the linear frequency scale into the psychoacoustic scale to obtain their respective scale segments in the psychoacoustic scale, and these scale segments of the preset quantity range are combined to form an integral range in the psychoacoustic scale. Then, the integral range is transformed into the linear frequency scale. Accordingly, the estimated gain values of all frequency points are obtained.

F2: Enhance the speech signal using the estimated gain values for all frequency points of the speech signal to obtain an initial enhanced speech signal.

The estimated gain values of the frequency points are multiplied by the values of the to-be-enhanced speech signal at the frequency points, respectively. That is, the estimated gain value of each frequency is multiplied by the value of the to-be-enhanced speech signal at such frequency to obtain the initial enhanced speech signal.

F3: Transform the initial enhanced speech signal from the frequency domain into the time domain to obtain the enhanced speech signal.

The initial enhanced speech signal may be transformed from the frequency domain into the time domain by using the inverse discrete Fourier transform. For example, in the above embodiment of the present disclosure, FFT is performed on the original speech signal to obtain the to-be-enhanced speech signal. In such case, in operation F3, the initial enhanced speech signal is transformed from the frequency domain into the time domain by using inverse FFT to obtain the final enhanced speech signal.

In this embodiment of the present disclosure, after the vector of the estimated gain of the to-be-enhanced speech signal is obtained by using the speech enhancement model, the speech enhancement is performed on the to-be-enhanced speech signal based on the vector of the estimated gain, to obtain the enhanced speech signal. The enhanced speech signal is a signal after noise in the original speech signal is removed, so that quality and intelligibility of a speech signal can be improved, thereby enhancing a communication experience.

An entire implementation flow of a method for enhancing a speech signal according to an embodiment of the present disclosure will be exemplarily described below with reference to FIG. 9.

As shown in FIG. 9, in a real-time communication process, after obtaining an original speech signal, a terminal device is configured to: first transform the original speech signal from a time domain into a frequency domain, for example, by FFT, to obtain a to-be-enhanced speech signal; then input the to-be-enhanced speech signal to an input layer and a dimension-reduction layer of a speech enhancement model in sequence; input an output of the dimension-reduction layer to a mapping layer by cyclic iteration, where a quantity of output channels progressively increases, and a number of iterations is set according to a requirement; input an output of the mapping layer to an output layer by cyclic iteration, where the output layer includes an intermediate convolutional network and an output convolutional network; cyclic iteration is performed on the two convolutional networks respectively, and numbers of iterations of the two convolutional networks are set according to a requirement; in addition, a quantity of output channels of the intermediate convolutional network keeps unchanged, and a quantity of output channels of the output convolutional network progressively increases; finally, the output layer outputs vector of the estimated gain; and perform speech enhancement on the to-be-enhanced speech signal based on the vector of the estimated gain through a gain module, to obtain an enhanced speech signal.

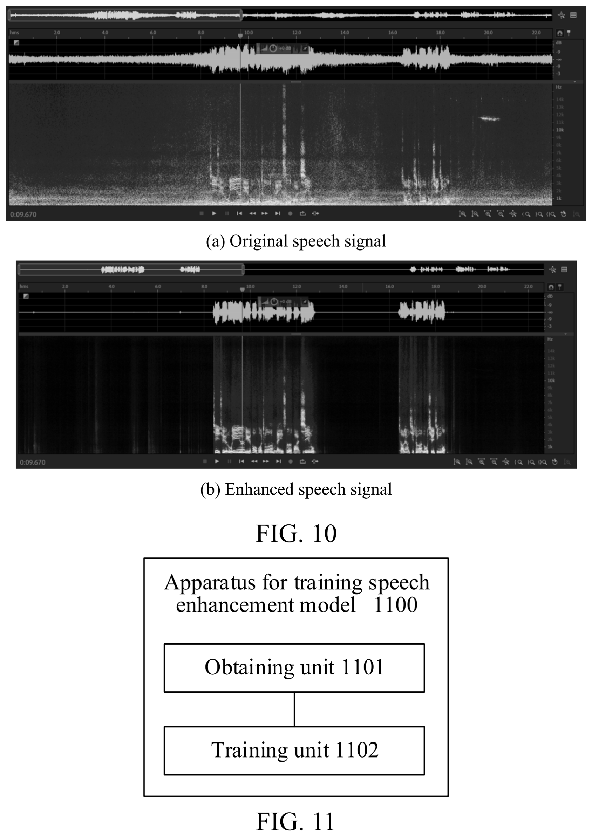

Exemplarily, an original speech signal is shown in FIG. 10(a). After the original speech signal is processed by using the speech enhancement flow of the embodiments of the present disclosure, an obtained enhanced speech signal obtained is shown in FIG. 10(b). As can be seen, a noise signal in the original speech signal is removed from the enhanced speech signal.

The method for enhancing a speech signal in this embodiment of the present disclosure may be applied to a real-time communication scenario, for example, a real-time conference scenario. When a call environment is noisy, background environment noise can be effectively removed by using the method for enhancing a speech signal in this embodiment of the present disclosure, thereby ensuring quality and intelligibility of a voice call.

For example, in a real-time communication process, after a microphone of the terminal device is turned on, a speech signal is acquired by the microphone, and then the terminal device performs speech enhancement on the speech signal by using the method for enhancing a speech signal in this embodiment of the present disclosure, to obtain a pure speech signal, namely, an enhanced speech signal, thus effectively reserving the voice of a main speaker and removing redundant background noise.

Based on the same inventive concept as the method embodiments, an embodiment of the present disclosure further provides an apparatus for training a speech enhancement model. A principle of the apparatus for solving a problem is similar to that of the method for training the speech enhancement model in the above embodiments. Therefore, for implementation of the apparatus, refer to the implementation of the above method, and repeated parts will not be elaborated herein again.

FIG. 11 is a structural block diagram of an apparatus for training a speech enhancement model according to an embodiment of the present disclosure. The apparatus 1100 includes an obtaining unit 1101 and a training unit 1102.

The obtaining unit 1101 is configured for obtaining a set of training samples, wherein each training sample in the set of training samples comprises a first speech signal and a noisy speech signal, and the noisy speech signal is obtained by adding noise into the first speech signal; and

The training unit 1102 is configured for performing iterative training on an initial version of a speech enhancement model using the set of training samples to obtain a trained version of the speech enhancement model. The initial version of the speech enhancement model comprises an input layer, a dimension-reduction layer, a mapping layer, and an output layer, and each iteration of the iterative training comprises following operations.

The input layer extracts a feature of the first speech signal of a training sample in the set of training samples and extracts a feature of the noisy speech signal in the training sample. The input layer fuses the feature of the first speech signal and the feature of the noisy speech signal to obtain a first audio feature.

The dimension-reduction layer compresses the first audio feature in a frequency-domain to obtain a second audio feature, where a dimension of the second audio feature in the frequency domain is less than the dimension of the first audio feature in the frequency domain.

The mapping layer converts the second audio feature into a third audio feature, where the mapping layer processes the second audio feature iteratively for a first quantity of cycles, and in every two adjacent cycles, a quantity of output channels used by the mapping layer in a precedent cycle is less than a quantity of output channels used by the mapping layer in a subsequent cycle.

The output layer converts the third audio feature into a vector of an estimated gain. A parameter of the speech enhancement model is adjusted according to a difference between the estimated gain and a ground-truth gain

In the embodiments of the present disclosure, dimension reduction is performed through the dimension-reduction layer in each round of training of the initial version of the speech enhancement model, thereby greatly reducing subsequent operation complexity. In addition, due to the cyclic iteration of the mapping layer, a depth of feature mapping and a parameter amount can be increased without additional model structure, so that a model training effect is enhanced, and the trained version of the speech enhancement model ensures a processing effect and reduces the operation complexity to improve an operation speed, thereby meeting a real-time operation requirement and enhancing a communication experience.

In all embodiments, the output layer may comprise an intermediate convolutional network and an output convolutional network.

When inputting the third audio feature into the output layer to obtain the estimated gain, the training unit 1102 is configured for following operations.

The intermediate convolutional network converts the third audio feature into an intermediate audio feature, where the intermediate convolutional network processes the third audio feature iteratively for a second quantity of cycles to obtain the intermediate audio feature, and a quantity of output channels used by the intermediate convolutional network is identity among the cycles.

The output convolutional network converts the intermediate audio feature into the estimated gain, where the output convolutional network processes the intermediate audio feature iteratively for a third quantity of cycles to obtain the vector of the estimated gain, and in every two adjacent cycles, a quantity of output channels used by the output convolutional network in a precedent cycle is greater than a quantity of output channels used by the output convolutional network in a subsequent cycle.

In all embodiments, the mapping layer may comprise at least one convolutional neural network and an attention network.

When converting the second audio feature into the third audio feature, the training unit 1102 is configured for performing iterative cycles of the first preset quantity.

Each cycle comprises following operations.

Convolution is performed on the second audio feature sequentially through the at least one convolutional neural network to obtain an intermediate convolutional feature.

The intermediate convolutional feature is processed through the attention network to obtain a new feature serving as an update of the second audio feature.

The new feature in a last one of the iterative cycles serves as the third audio feature.

In all embodiments, both the first speech signal and the noisy speech signal may be spectral signals, and the first audio feature is a spectral feature. When compressing the first audio feature in the frequency-domain to obtain the second audio feature, the training unit 1102 is configured for performing following operations.

The first audio feature is transformed from a linear frequency scale into a psychoacoustic scale to obtain a transformed first audio feature. The transformed first audio feature is divided using the psychoacoustic scale into audio sub-features of a preset quantity.

The audio sub-features are transformed from the psychoacoustic scale into the linear frequency scale to obtain transformed audio sub-features, respectively, where each transformed audio sub-feature occupies a respective frequency band in the linear frequency scale. Each of the transformed audio sub-features is filtered through a respective band-pass filter to obtain a respective element of the second audio feature, where each element of the second audio feature represents a feature value of a part of the first audio feature in the respective frequency band.

In all embodiments, the vector of the estimated gain may comprise estimated gain values for the frequency bands, respectively. When adjusting the parameter of the speech enhancement model according to the difference between the estimated gain and the ground-truth gain, the training unit 1102 is configured for performing following operations.

The vector of the estimated gain is decompressed in the frequency domain to obtain a decompressed vector of the estimated gain, where the decompressed vector comprises estimated gain values for all frequency points of the noisy speech signal, and the gained value for each frequency band serves as the gain values for all frequency points in said frequency band.

The parameter of the speech enhancement model is adjusted according to the difference between the decompressed vector of the estimated gain and a vector of the ground-truth gain.

Based on the same inventive concept as the method embodiments, embodiments of the present disclosure further provide an apparatus for enhancing a speech signal. A principle of the apparatus for solving a problem is similar to that of the method for enhancing a speech signal in the above embodiments. Therefore, for implementation of the apparatus, refer to the implementation of the above method, and repeated parts will not be elaborated herein again.

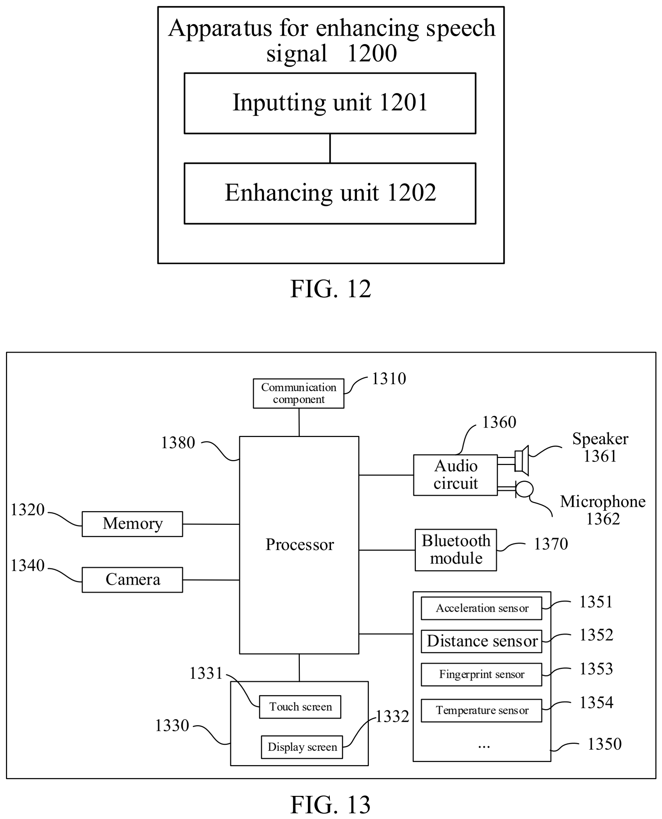

As shown in FIG. 12, an embodiment of the present disclosure provides an apparatus 1200 for enhancing a speech signal. The apparatus comprises an inputting unit 1201 and an enhancing unit 1202.

The inputting unit 1201 is configured for inputting a second speech signal into a speech enhancement model to obtain a vector of the estimated gain

The enhancing unit 1202 is configured for removing noise from the second speech signal using the estimated gain to obtain an enhanced speech signal.

In all embodiments, the second speech signal may be obtained through transforming an original speech signal from a time domain into a frequency domain. The vector of the estimated gain comprises estimated gain values for frequency bands of a preset quantity.

The enhancing unit 1202 is configured for performing following operations.

The vector of the estimated gain is decompressed in the frequency domain to obtain a decompressed vector of the estimated gain, where the decompressed vector comprises estimated gain values for all frequency points of the second speech signal, and the gained value for each frequency band serves as the gain values for all frequency points in said frequency band.

The speech signal is enhanced using the estimated gain values for all frequency points of the speech signal to obtain an initial enhanced speech signal.

The initial enhanced speech signal is transformed from the frequency domain into the time domain to obtain the enhanced speech signal.

For ease of description, the above components are respectively described as they are divided into units (or modules) based on functions. Certainly, during implementation of the present disclosure, the functions of the units (or modules) may be implemented in the same or a plurality of pieces of software or hardware.

After the method for enhancing a speech signal and apparatus according to the exemplary implementations of the present disclosure are described, an electronic device according to another exemplary implementation of the present disclosure is described next.

Based on a same inventive concept as the above method embodiments, an embodiment of the present disclosure further provides an electronic device. In an embodiment, the electronic device may be a terminal device, such as the terminal device 110 shown in FIG. 1. In this embodiment, a structure of the electronic device may be shown in FIG. 13, including: components such as a communication assembly 1310, a memory 1320, a display unit 1330, a camera 1340, a sensor 1350, an audio circuit 1360, a Bluetooth module 1370, and a processor 1380.

The communication module 1310 is configured to communicate with a server. In some embodiments, the structure of the electronic device may include a circuit wireless fidelity (WiFi) module. The WiFi module is a short distance wireless transmission technology, and the electronic device may help a user to transmit and receive information through the WiFi module.

The memory 1320 may be configured to store a software program and data. The processor 1380 executes various functions and data processing of the terminal device 110 by running the software program or data stored in the memory 1320.

The display unit 1330 may be further configured to display information entered by a user or information provided for a user, and a graphical user interface (GUI) of various menus of the terminal device 110.

The camera 1340 may be configured to capture a static image, and a user may issue the image captured by the camera 1340 through an application.

The terminal device may further include at least one sensor 1350.

The audio circuit 1360, a speaker 1361, and a microphone 1362 may provide audio interfaces between the user and the terminal device 110.

The Bluetooth module 1370 is configured to perform information interaction with other Bluetooth devices having Bluetooth modules through a Bluetooth protocol.

The processor 1380 is a control center of the terminal device, and is connected to parts of an entire terminal by using various interfaces and lines. By running or executing the software program stored in the memory 1320 and invoking data stored in the memory 1320, the processor performs various functions of the terminal device and processes data.

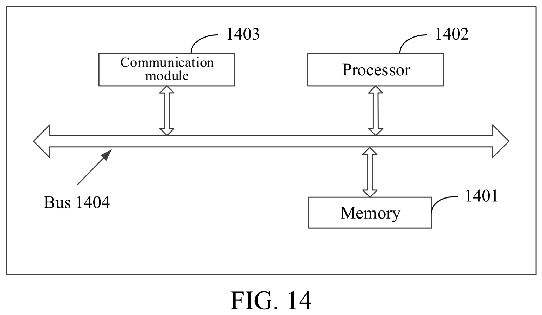

In another embodiment, the electronic device may alternatively be a server, for example, the server 120 shown in FIG. 1. In this embodiment, a structure of the electronic device may be shown in FIG. 14, including a memory 1401, a communication module 1403, and one or more processors 1402.

The memory 1401 is configured to store a computer program executed by the processor 1402. The memory 1401 may mainly include a program storage region and a data storage region, where the program storage region may store an operating system, a program required to run an instant messaging function, or the like. The data storage region may store various instant messaging information, an operation instruction set, and the like.

The memory 1401 may be a volatile memory, for example, a random access memory (RAM); the memory 1401 may alternatively be a non-volatile memory, for example, a read-only memory, a flash memory, a hard disk drive (HDD) or a solid-state drive (SSD); or the memory 1401 is any other medium capable of being configured to carry or store an expected computer program having an instruction or data structural form and being accessed by the computer. This is not limited herein. The memory 1401 may be a combination of the above memories.

The processor 1402 may include one or more central processing units (CPU), digital processing units, or the like. The processor 1402 is configured to implement the above method for enhancing a speech signal or the above method for training the speech enhancement model when calling the computer program stored in the memory 1401.

The communication module 1403 is configured to communicate with the terminal device or other servers.

Specific connecting media among the above memory 1401, communication module 1403 and processor 1402 are not limited in this embodiment of the present disclosure. In this embodiment of the present disclosure, in FIG. 14, the memory 1401 and the processor 1402 are connected by a bus 1404. The bus 1404 is described by a thick line in FIG. 14. Connecting modes for other components are schematically illustrated only, which are not limited herein. The bus 1404 may be classified as an address bus, a data bus, a control bus, or the like. For ease of description, only one thick line is used to describe the bus in FIG. 14, and it does not mean that there is only one bus or one type of buses.

The memory 1401 has a computer storage medium stored therein. The computer storage medium has a computer-executable instruction stored therein. The computer-executable instruction is configured for implementing the method for enhancing a speech signal or the method for training the speech enhancement model of the embodiments of the present disclosure. The processor 1402 is configured to perform the above method for enhancing a speech signal or the above method for training the speech enhancement model, as shown in FIG. 3 or FIG. 8.

In some possible implementations, the aspects of the method for enhancing a speech signal or the method for training the speech enhancement model provided in the present disclosure may be further implemented in the form of a program product including a computer program. When the program product is run on the electronic device, the computer program is configured to cause the electronic device to perform the operations of the method for enhancing a speech signal or the method for training the speech enhancement model according to the various exemplary implementations of the present disclosure described above in this specification.

For example, the electronic device may perform the operations shown in FIG. 3 or FIG. 8.

The program product may use any combination of one or more readable media. The readable medium may be a readable signal medium or a readable storage medium. The readable storage medium may be, for example, but is not limited to, an electric, magnetic, optical, electromagnetic, infrared, or semiconductor system, apparatus, or device, or any combination thereof. More specific examples of the readable storage medium (nonexhaustive list) include: an electrical connection having one or more wires, a portable disk, a hard disk, a random access memory (RAM), a read only memory (ROM), an erasable programmable ROM (EPROM or a flash memory), an optical fiber, a compact disc ROM (CD-ROM), an optical storage device, a magnetic storage device, or any suitable combination thereof.

The program product in this implementation of the present disclosure may use a portable compact disc read-only memory (CD-ROM), includes a computer program, and may be run on the electronic device. However, the program product of the present disclosure is not limited thereto. In this specification, the readable storage medium may be any tangible medium that includes or stores a program. The program may be used by or in combination with a command execution system, apparatus, or device.

The readable signal medium may include a data signal propagated in a baseband or as a part of a carrier wave, which carries a computer-readable program. This propagated data signal may use a plurality of forms, including, but not limited to, an electromagnetic signal, an optical signal, or any suitable combination thereof. The readable signal medium may alternatively be any readable medium other than a readable storage medium, and the readable medium may be configured for sending, propagating, or transmitting a program used by or in combination with a command execution system, apparatus, or device.

The computer program included in the readable medium may be transmitted by using any suitable medium, including but not limited to a wireless medium, a wired medium, an optical cable, a radio frequency (RF), or the like, or any suitable combination thereof.

The computer program for performing the operations of the present disclosure may be written in one or a combination of more programming languages. The programming languages include an object-oriented programming language such as Java and C++, and conventional procedural programming languages such as "C" language or similar programming languages. The computer program may be executed entirely on a user electronic device, may be executed partially on a user electronic device, may be executed as an independent software package, may be executed partially on a user electronic device and partially on a remote electronic device, or may be executed entirely on a remote electronic device or a server. In a case involving the remote electronic device, the remote electronic device may be connected to the user electronic device through any type of network including a local region network (LAN) or a wide region network (WAN), or may be connected to an external electronic device (for example, connected through the Internet by using an Internet service provider).

Although a plurality of units or subunits of the apparatus are mentioned in the foregoing detailed descriptions, such division is merely exemplary and not mandatory. In fact, according to the implementations of the present disclosure, the features and functions of two or more units described above may be embodied in one unit. On the contrary, the features and functions of one unit described above may be embodied in a plurality of units.

In addition, although the operations of the methods of the present disclosure are described in a particular order in the accompanying drawings, this does not require or imply that these operations need to be performed in this particular order, or that all the shown operations need to be performed to achieve desired results. Additionally or alternatively, some operations may be omitted, a plurality of operations may be combined into one operation for execution, and/or one operation may be decomposed into a plurality of operations for execution.

A person skilled in the art can understand that the embodiments of the present disclosure may be provided as a method, a system, or a computer program product. Therefore, the present disclosure may use a form of hardware-only embodiments, software-only embodiments, or embodiments combining software and hardware. Moreover, the present disclosure may use the form of a computer program product implemented on one or more computer-available storage media (including, but not limited to, a magnetic disk memory, a CD-ROM, an optical memory, and the like) including a computer-available program.

The present disclosure is described with reference to the flowcharts and/or the block diagrams of the method, the device (system), and the computer program product according to the embodiments of the present disclosure. Computer program instructions can be configured for implementing each flow and/or each block in the flowcharts and/or the block diagrams and a combination of a flow and/or a block in the flowcharts and/or the block diagrams. These computer program instructions may be provided to a general-purpose computer, a special-purpose computer, an embedded processor, or a processor of another programmable data processing device to generate a machine, so that an apparatus for implementing functions specified in one or more flows in the flowcharts and/or one or more blocks in the block diagrams is generated by using instructions executed by a computer or the processor of the another programmable data processing device.

These computer program instructions may alternatively be stored in a computer-readable memory that may instruct a computer or the another programmable data processing device to work in a particular manner, so that the instructions stored in the computer-readable memory generate a product that includes an instruction apparatus. The instruction apparatus implements a specified function in one or more flows in the flowcharts and/or in one or more blocks in the block diagrams.

These computer program instructions may be further loaded onto a computer or the another programmable data processing device, so that a series of operations are performed on the computer or the another programmable device, thereby generating computer-implemented processing. Therefore, the instructions executed on the computer or the another programmable device provide operations for implementing a specified function in one or more processes in the flowcharts and/or in one or more blocks in the block diagrams.

Although exemplary embodiments of the present disclosure have been described, once persons skilled in the art know the basic creative concept, they can make additional changes and modifications to these embodiments. Therefore, the following claims are intended to be construed as to cover the exemplary embodiments and all changes and modifications falling within the scope of the present disclosure.

If the modifications and variations made to the present disclosure fall within the scope of the claims of the present disclosure and their equivalent technologies, the present disclosure is intended to include these modifications and variations.

**Claims**

1. A method for training a speech enhancement model, executable by an electronic device, the method comprising:

   obtaining a set of training samples, wherein each training sample in the set of training samples comprises a first speech signal and a noisy speech signal, and the noisy speech signal is obtained by adding noise into the first speech signal; and
   performing iterative training on an initial version of a speech enhancement model using the set of training samples to obtain a trained version of the speech enhancement model, wherein:

      the initial version of the speech enhancement model comprises an input layer, a dimension-reduction layer, a mapping layer, and an output layer, and in each iteration of the iterative training,

         the input layer is configured for extracting a feature of the first speech signal of a training sample in the set of training samples, extract a feature of the noisy speech signal in the training sample, and fuse the feature of the first speech signal and the feature of the noisy speech signal to obtain a first audio feature;

the dimension-reduction layer is configured for compressing the first audio feature in a frequency-domain to obtain a second audio feature, wherein a dimension of the second audio feature in the frequency domain is less than the dimension of the first audio feature in the frequency domain;

the mapping layer is configured for converting the second audio feature into a third audio feature, wherein the mapping layer processes the second audio feature iteratively for a first quantity of cycles, and in every two adjacent cycles, a quantity of output channels used by the mapping layer in a precedent cycle is less than a quantity of output channels used by the mapping layer in a subsequent cycle; and

the output layer is configured for converting the third audio feature into a vector of an estimated gain; and

performing the iterative training on the initial version of the speech enhancement model comprises: in each iteration, adjusting a parameter of the speech enhancement model according to a difference between the estimated gain and a ground-truth gain.

2. The method according to claim 1, wherein the output layer comprises an intermediate convolutional network and an output convolutional network, and when the output layer converts the third audio feature into the vector of the estimated gain:

the intermediate convolutional network is configured for converting the third audio feature into an intermediate audio feature, wherein the intermediate convolutional network processes the third audio feature iteratively for a second quantity of cycles to obtain the intermediate audio feature, and a quantity of output channels used by the intermediate convolutional network is identity among the cycles; and

the output convolutional network is configured to for converting the intermediate audio feature into the estimated gain, wherein the output convolutional network processes the intermediate audio feature iteratively for a third quantity of cycles to obtain the vector of the estimated gain, and in every two adjacent cycles, a quantity of output channels used by the output convolutional network in a precedent cycle is greater than a quantity of output channels used by the output convolutional network in a subsequent cycle.

3. The method according to claim 1, wherein the mapping layer comprises at least one convolutional neural network and an attention network, when converting the second audio feature into the third audio feature, the mapping layer is configured for performing iterative cycles of the first preset quantity, and in each cycle:

the at least one convolutional neural network is configured for sequentially performing convolution on the second audio feature to obtain an intermediate convolutional feature; and

the attention network is configured for processing the intermediate convolutional feature to obtain a new feature serving as an update of the second audio feature;

wherein the new feature in a last one of the iterative cycles serves as the third audio feature.

4. The method according to claim 1, wherein both the first speech signal and the noisy speech signal are spectral signals, the first audio feature is a spectral feature, and the dimension reduction layer is configured for:

transforming the first audio feature from a linear frequency scale into a psychoacoustic scale to obtain a transformed first audio feature;

dividing, using the psychoacoustic scale, the transformed first audio feature into audio sub-features of a preset quantity; and

transforming the audio sub-features from the psychoacoustic scale into the linear frequency scale to obtain transformed audio sub-features, respectively, wherein each transformed audio sub-feature occupies a respective frequency band in the linear frequency scale; and

filtering each of the transformed audio sub-features through a respective band-pass filter to obtain a respective element of the second audio feature, wherein each element of the second audio feature represents a feature value of a part of the first audio feature in the respective frequency band.

5. The method according to claim 4, wherein the vector of the estimated gain comprises estimated gain values for the frequency bands, respectively, and adjusting the parameter of the speech enhancement model according to the difference between the estimated gain and the ground-truth gain comprises:

decompressing the vector of the estimated gain in the frequency domain to obtain a decompressed vector of the estimated gain, wherein the decompressed vector comprises estimated gain values for all frequency points of the noisy speech signal, and the gained value for each frequency band serves as the gain values for all frequency points in said frequency band; and adjusting the parameter of the speech enhancement model according to the difference between the decompressed vector of the estimated gain and a vector of the ground-truth gain.

6. A method for enhancing a speech signal, executable by an electronic device, the method comprising:

inputting a second speech signal into a speech enhancement model trained through the method according to any one of claims 1 to 5 to obtain a vector of the estimated gain; and removing noise from the second speech signal using the estimated gain to obtain an enhanced speech signal.

7. The method according to claim 6, further comprising:

transforming an original speech signal from a time domain into a frequency domain to obtain the second speech signal; wherein the vector of the estimated gain comprises estimated gain values for frequency bands of a preset quantity; and wherein removing noise from the second speech signal using the estimated gain to obtain an enhanced speech signal comprises:

decompressing the vector of the estimated gain in the frequency domain to obtain a decompressed vector of the estimated gain, wherein the decompressed vector comprises estimated gain values for all frequency points of the second speech signal, and the gained value for each frequency band serves as the gain values for all frequency points in said frequency band; enhancing the second speech signal using the estimated gain values for all frequency points of the speech signal to obtain an initial enhanced speech signal; and transforming the initial enhanced speech signal from the frequency domain into the time domain to obtain the enhanced speech signal.

8. An apparatus for training a speech enhancement model, comprising:

an obtaining unit, configured for obtaining a set of training samples, wherein each training sample in the set of training samples comprises a first speech signal and a noisy speech signal, and the noisy speech signal is obtained by adding noise into the first speech signal; and a training unit, configured for performing iterative training on an initial version of a speech enhancement model using the set of training samples to obtain a trained version of the speech enhancement model, wherein:

the initial version of the speech enhancement model comprises an input layer, a dimension-reduction layer, a mapping layer, and an output layer, and in each iteration of the iterative training,

the input layer is configured for extracting a feature of the first speech signal of a training sample in the set of training samples, extract a feature of the noisy speech signal in the training sample, and fuse the feature of the first speech signal and the feature of the noisy speech signal to obtain a first audio feature; the dimension-reduction layer is configured for compressing the first audio feature in a frequency-domain to obtain a second audio feature, wherein a dimension of the second audio feature in the frequency domain is less than the dimension of the first audio feature in the frequency domain; the mapping layer is configured for converting the second audio feature into a third audio feature, wherein the mapping layer processes the second audio feature iteratively for a first quantity of cycles, and in every two adjacent cycles, a quantity of output channels used by the mapping layer in a precedent cycle is less than a quantity of output channels used by the mapping layer in a subsequent cycle; and the output layer is configured for converting the third audio feature into a vector of an estimated gain; and

the training unit is configured for adjusting, in each iteration, a parameter of the speech enhancement model according to a difference between the estimated gain and a ground-truth gain.

9. The apparatus according to claim 8, wherein the output layer comprises an intermediate convolutional network and an output convolutional network, and when inputting the third audio feature into the output layer to obtain the estimated gain, the training unit is configured for:

converting, by the intermediate convolutional network, the third audio feature into an intermediate audio feature, wherein the intermediate convolutional network processes the third audio feature iteratively for a second quantity of cycles to obtain the intermediate audio feature, and a quantity of output channels used by the intermediate convolutional network is identity among the cycles; and

converting, by the output convolutional network, the intermediate audio feature into the estimated gain, wherein the output convolutional network processes the intermediate audio feature iteratively for a third quantity of cycles to obtain the vector of the estimated gain, and in every two adjacent cycles, a quantity of output channels used by the output convolutional network in a precedent cycle is greater than a quantity of output channels used by the output convolutional network in a subsequent cycle.

10. The apparatus according to claim 8, wherein the mapping layer comprises at least one convolutional neural network and an attention network, when converting the second audio feature into the third audio feature, the training unit (1102) is configured for performing iterative cycles of the first preset quantity, and in each cycle :

the at least one convolutional neural network is configured for sequentially performing convolution on the second audio feature sequentially to obtain an intermediate convolutional feature; and

the attention network is configured for processing the intermediate convolutional feature to obtain a new feature serving as an update of the second audio feature;

wherein the new feature in a last one of the iterative cycles serves as the third audio feature.

11. The apparatus according to claim 8, wherein both the first speech signal and the noisy speech signal are spectral signals, the first audio feature is a spectral feature, and when compressing the first audio feature in the frequency-domain to obtain the second audio feature, the training unit is configured for:

transforming the first audio feature from a linear frequency scale into a psychoacoustic scale to obtain a transformed first audio feature;

dividing, using the psychoacoustic scale, the transformed first audio feature into audio sub-features of a preset quantity; and

transforming the audio sub-features from the psychoacoustic scale into the linear frequency scale to obtain transformed audio sub-features, respectively, wherein each transformed audio sub-feature occupies a respective frequency band in the linear frequency scale; and

filtering each of the transformed audio sub-features through a respective band-pass filter to obtain a respective element of the second audio feature, wherein each element of the second audio feature represents a feature value of a part of the first audio feature in the respective frequency band.

12. An apparatus for enhancing a speech signal, comprising:

an inputting unit, configured for inputting a second speech signal into a speech enhancement model trained through the method according to any one of claims 1 to 5 to obtain a vector of the estimated gain; and

an enhancing unit, configured for removing noise from the second speech signal using the estimated gain to obtain an enhanced speech signal.

13. An electronic device, comprising a processor and a memory, wherein memory stores a computer program, and the computer program when executed by the processor causes the processor to perform the method according to any one of claims 1 to 5 or the method according to claim 6 or 7.

14. A computer-readable storage medium, storing a computer program, wherein the computer program when executed on an electronic device causes the electronic device to perform the method according to any one of claims 1 to 5 or the method according to claim 6 or 7.

15. A computer program product, comprising a computer program, wherein:

the computer program is stored in a computer-readable storage medium, and

when a processor of an electronic device reads the computer program from the computer-readable storage medium, the computer program is executed by the processor to cause the electronic device to perform the method according to any one of claims 1 to 5 or the method according to claim 6 or 7.

FIG. 1

FIG. 2

| | |
|---|---|
| Obtain a set of training samples, wherein each training sample in the set of training samples comprises a first speech signal and a noisy speech signal, and the noisy speech signal is obtained by adding noise into the first speech signal | S31 |
| Perform iterative training on an initial version of a speech enhancement model using the set of training samples to obtain a trained version of the speech enhancement model, where each iteration of the iterative training comprises S321 to S324 | S32 |
| Input layer extracts a feature of the first speech signal of a training sample in the set of training samples and a feature of the noisy speech signal in the training sample and fuses the feature of the first speech signal and the feature of the noisy speech signal to obtain a first audio feature | S321 |
| Dimension reduction layer compresses the first audio feature in a frequency-domain to obtain a second audio feature, wherein a dimension of the second audio feature in the frequency domain is less than the dimension of the first audio feature in the frequency domain | S322 |
| Mapping layer converts the second audio feature into a third audio feature, where the mapping layer processes the second audio feature iteratively for a first quantity of cycles, and in every two adjacent cycles, a quantity of output channels used by the mapping layer in a precedent cycle is less than a quantity of output channels used by the mapping layer in a subsequent cycle | S323 |
| Output layer converts the third audio feature into a vector of an estimated gain, where a parameter of the speech enhancement model is adjusted according to a difference between the estimated gain and a ground-truth gain | S324 |

FIG. 3

First speech signal (spectrum)    Noisy speech signal (spectrum)

Input layer

CNN    CNN

Concatenate

CNN

First audio feature

FIG. 4

Filter 1 (one
convolution kernel)

Feature map of
channel 1

Feature
input into
one channel

Filter 2 (one
convolution kernel)

Feature map of
channel 2

...

...

Filter n (one
convolution kernel)

Feature map of
channel n

FIG. 5A

Second audio feature

Three cycles

Mapping layer

CNN

CNN

Activation function

CNN

CNN

Attention network

Third audio feature

FIG. 5B

Third audio feature

Vector of estimated gain

FIG. 6

First speech signal

Noisy speech signal

Input layer

Dimension-reduction layer

Mapping layer

Cyclic iteration

Output layer

Cyclic iteration

Estimated gain

Ground-truth gain

Loss

Process of training speech enhancement model

FIG. 7A

First speech
signal (spectra)

Noisy speech
signal (spectra)

Input layer

CNN

CNN

Concatenate

CNN

First audio feature

Dimension-reduction
layer

Second audio
feature

Third audio feature

Three cycles

Mapping layer

CNN

Batch norm.

Activation function

CNN

CNN

Attention network

Intermediate
convolutional
network

CNN

CNN

Two cycles

Output
layer

Concatenate

Output
convolutional
network

CNN

CNN

CNN

Three cycles

Vector of estimated gain

FIG. 7B

Input a second speech signal into a speech enhancement model to obtain a vector of the estimated gain ⌐ S81

Remove noise from the second speech signal using the estimated gain to obtain an enhanced speech signal ⌐ S82

## FIG. 8

Process of enhancing speech signal

## FIG. 9

(a) Original speech signal

(b) Enhanced speech signal

FIG. 10

FIG. 11

Apparatus for enhancing speech signal   1200

Inputting unit 1201

Enhancing unit 1202

FIG. 12

Communication component — 1310

1380

1360

Speaker 1361

Audio circuit

Microphone 1362

1320 — Memory

Processor

Bluetooth module — 1370

1340 — Camera

Acceleration sensor — 1351

Distance sensor — 1352

Fingerprint sensor — 1353

1331

Temperature sensor — 1354

1330

Touch screen

1332

Display screen

... — 1350

FIG. 13

1403

Communication
module

1402

Processor

Bus 1404

1401

Memory

FIG. 14

## INTERNATIONAL SEARCH REPORT

| | |
|---|---|
| International application No. | |
| | **PCT/CN2024/099475** |

### A. CLASSIFICATION OF SUBJECT MATTER

G10L21/02(2013.01)i; G10L25/30(2013.01)i; G10L21/0208(2013.01)i; G06N3/0464(2023.01)i; G06N3/084(2023.01)i

According to International Patent Classification (IPC) or to both national classification and IPC

### B. FIELDS SEARCHED

Minimum documentation searched (classification system followed by classification symbols)

IPC: G10L21/-; G10L25/-; G06N3/-

Documentation searched other than minimum documentation to the extent that such documents are included in the fields searched

Electronic data base consulted during the international search (name of data base and, where practicable, search terms used)

CNTXT, CNABS, ENTXT, DWPI, CNKI: 除噪, 降噪, 去噪, 语音增强, 带宽压缩, 频带压缩, 映射, 增益, 语音, 语音增强模型, de-nois+, noise reduct+, voice enhancement model, frequency band compression, mapp+, gain, speech, speech enhancement models

### C. DOCUMENTS CONSIDERED TO BE RELEVANT

| Category* | Citation of document, with indication, where appropriate, of the relevant passages | Relevant to claim No. |
|---|---|---|
| PX | CN 116959469 A (TENCENT TECHNOLOGY (BEIJING) CO., LTD.) 27 October 2023 (2023-10-27)<br>claims 1-15 | 1-15 |
| A | CN 110085249 A (NANJING INSTITUTE OF TECHNOLOGY) 02 August 2019 (2019-08-02)<br>description, paragraphs [50]-[85] | 1-15 |
| A | CN 113838471 A (SABINE TECHNOLOGY CO., LTD.) 24 December 2021 (2021-12-24)<br>entire document | 1-15 |
| A | CN 113921030 A (JIANGSU QINGWEI INTELLIGENT TECHNOLOGY CO., LTD.) 11 January 2022 (2022-01-11)<br>entire document | 1-15 |
| A | CN 115512714 A (DINGTALK (CHINA) INFORMATION TECHNOLOGY CO., LTD.) 23 December 2022 (2022-12-23)<br>entire document | 1-15 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br><br>**19 August 2024** | Date of mailing of the international search report<br><br>**28 August 2024** |
| Name and mailing address of the ISA/CN<br><br>**China National Intellectual Property Administration (ISA/CN)**<br>**China No. 6, Xitucheng Road, Jimenqiao, Haidian District, Beijing 100088** | Authorized officer<br><br><br><br><br>Telephone No. |

Form PCT/ISA/210 (second sheet) (July 2022)

**INTERNATIONAL SEARCH REPORT**

| International application No. |
| --- |
| **PCT/CN2024/099475** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2017061978 A1 (CAMPBELL, Shannon) 02 March 2017 (2017-03-02)<br>entire document | 1-15 |
| A | US 2007174050 A1 (QNX SOFTWARE SYSTEMS LTD.) 26 July 2007 (2007-07-26)<br>entire document | 1-15 |

Form PCT/ISA/210 (second sheet) (July 2022)

## INTERNATIONAL SEARCH REPORT
### Information on patent family members

| International application No. |
| --- |
| **PCT/CN2024/099475** |

| Patent document cited in search report | | | Publication date (day/month/year) | Patent family member(s) | | | Publication date (day/month/year) |
| --- | --- | --- | --- | --- | --- | --- | --- |
| CN | 116959469 | A | 27 October 2023 | None | | | |
| CN | 110085249 | A | 02 August 2019 | None | | | |
| CN | 113838471 | A | 24 December 2021 | None | | | |
| CN | 113921030 | A | 11 January 2022 | None | | | |
| CN | 115512714 | A | 23 December 2022 | None | | | |
| US | 2017061978 | A1 | 02 March 2017 | None | | | |
| US | 2007174050 | A1 | 26 July 2007 | US | 8249861 | B2 | 21 August 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023110420658